# EUROPEAN PATENT APPLICATION

(11) **EP 4 506 300 A1**
(43) Date of publication of application: **12.02.2025**
(21) Application number: 24193642.6
(22) Date of filing: 08.08.2024
(51) Int. Cl.: B66F 9/075, B62B 3/06

(54) **NESTING OF A MATERIALS-HANDLING SLED IN A PALLET TRUCK**

(30) Priority: 10.08.2023 US 202363531933 P; 14.09.2023 US 202318368069
(71) Applicant: Hyster-Yale Materials Handling, Inc., Fairview, OR 97024 (US)
(72) Inventor: ROSSI, Igor, GAGGIANO (IT); RADAELLI, Fabio, MILAN (IT); STIGLIANO, Ester, MILAN (IT); NICOLOSI, Davide, MILAN (IT); CAVAZZIN, Andrea, MILAN (IT)
(74) Representative: Forresters IP LLP

(57) **Abstract**

This disclosure relates to a combination of a pallet truck (100) and a sled (200) for delivering goods from a truck into a building, a method for making an in-building delivery of palletized loads from a truck, and a dual-use, half-sized pallet (300) that can be carried by either the pallet truck (100) or the sled (200). The pallet truck (100) is shaped and sized to nest with the sled (200) by comprising an alignment feature (120, 122, 150, 170) configured to mate the sled (200) with the pallet truck (100). The pallet truck (100) is shaped, sized, and constructed to lift the sled (200) along with at least two palletized loads of goods. The pallet truck (100) is also shaped and sized to fit within a bed (600) of a truck. The sled (200) comprises an alignment feature (260, 270, 500, 540) compatible with the alignment feature (120, 122, 150, 170) of the pallet truck (100), and a lifting mechanism shaped, sized, and constructed to lift at least one of the palletized loads of goods.

## Description

### RELATED APPLICATIONS

Priority is claimed to U.S. Provisional Patent Application No. 63/531,933, filed on August 10, 2023, entitled "NESTING OF A MATERIALS-HANDLING SLED IN A PALLET TRUCK," the entire disclosure of which is hereby incorporated by reference. Priority is claimed to U.S. Patent Application No. 18/368,069, filed on September 14, 2023, entitled "NESTING OF A MATERIALS-HANDLING SLED IN A PALLET TRUCK," the entire disclosure of which is hereby incorporated by reference.

### TECHNICAL FIELD

The field of this disclosure relates generally to material-handling vehicles. More specifically, this disclosure relates to a nesting combination of a sled suitable for in-store use and a pallet truck suitable for loading and unloading a delivery truck.

### BACKGROUND INFORMATION

A pallet truck is a materials-handling vehicle that can support and carry one or more pallets. Typical pallet trucks include a number (typically two) of lifting load forks connected at their heel end to a chassis or body. A fork typically includes one or more load wheels on its bottom side, typically toward its toe end. A lifting mechanism, which may be, for example, hydraulic or electric, lifts the forks together with goods, such as pallets loaded thereon, possibly along with some or all of the chassis or frame together with the forks and goods thereon. Typically, the forks and load thereon are raised only enough for the load (*e.g.*, the bottom of a pallet) to clear the floor sufficiently to move without dragging on the floor. A steering mechanism, such as a tiller, is also typically provided to steer the pallet truck. Typically, a steerable traction wheel located on the tiller end of the truck is connected to and controlled by the tiller to provide steerability. Controls to activate the lifting mechanism are typically located on or near the tiller handle. A pallet truck may provide power to one or more of its wheels to aid transport of its load, especially up inclines.

Pallet trucks are well suited to carry pallets in warehouses, outdoor yards (provided the ground is suitably hard and flat) or parking lots, and even within a lorry or truck bed or trailer. Pallet trucks, however, are typically not well suited for use in a store. That is so for several reasons. For example, a typical pallet is often too wide to fit through store doors or in the aisles of a store. Also, it is difficult to control a pallet via the tiller in tight spaces. Furthermore pallet wheels have been known to damage store flooring.

For these reasons, materials-handling vehicles other than pallet trucks are often used to take loads *(e.g.,* cases of beverages, food, or other merchandise) inside a store, such as a convenience store or a grocery store. Conventionally, a delivery truck parks near the store. Thereafter, the truck driver/operator must transport the goods from the truck into the store. One of the most primitive approaches to this problem uses a two-wheeled tilting hand truck or dolly, which can be manually loaded near the delivery truck and then wheeled into the store, often through the same door(s) used by customers. Once in the store, the driver/operator unloads the goods onto store shelves or in a refrigerated cooler. This approach is inefficient, as the size of the load that can be carried by a hand truck/dolly is limited; as a result, stocking a store may require multiple trips to and from the delivery truck. This approach is also manually intensive for the driver/operator.

Another approach uses a light duty delivery cart, often referred to as a "sled." A sled has a higher capacity than a hand truck/dolly. But, a sled, like a hand truck/dolly, must typically be manually loaded from the delivery truck outside the store. A typical sled carries its load in a narrower configuration than a pallet truck. For example, a typical load configuration on a sled is one or two cases wide, stacked several layers high. As compared to a pallet truck, a sled is more easily maneuverable in tight spaces, such as through doorways, down corridors, down store aisles, and in walk-in coolers, and is less likely to damage store floors.

If the delivery truck or trailer has a lift gate, then a hand truck/dolly or sled can enter and exit the truck/trailer bed/lorry via the lift gate and pick up goods therein. In the case of a sled, the goods are preferably loaded on smaller pallets approximately half the size of a conventional square pallet. Such a pallet approximately matches the load area of a sled and is more easily maneuverable through doors, down aisles, and into coolers of a store.

Both pallet trucks and sleds have been used together in limited ways to deliver beverages into stores. For example, one approach loads half-sized pallets into a truck bed/lorry at a warehouse or distribution center using a standard pallet truck, which can carry the half-sized pallets two at a time. At the store, a sled is then used to take one or two pallets at a time out of the truck bed/lorry via the truck's lift gate. If necessary, half pallets are taken into the store one at a time using the sled.

### OVERVIEW OF DISCLOSURE

This disclosure generally relates to (1) a combination of a pallet truck and a sled for delivering goods from a truck into a building, (2) a method for making an in-building delivery of at least one palletized load from a truck, and (3) a dual-use pallet half the size of a conventional pallet that can be carried by both a pallet truck and a sled.

In one embodiment, a pallet truck and sled combination can be used to deliver goods from a truck into a building. The combination comprises a pallet truck and a sled. The pallet truck is shaped and sized to nest with the sled by comprising an alignment feature configured to mate the sled with the pallet truck. The pallet truck is shaped, sized, and constructed to lift the sled along with at least two palletized loads of goods. The pallet truck is also shaped and sized to fit within a bed of a truck. The sled comprises an alignment feature compatible with the alignment feature of the pallet truck, and a lifting mechanism shaped, sized, and constructed to lift at least one of the palletized loads of goods.

Optionally, the pallet truck further comprises a first portion of a lock mechanism and the sled comprises a second portion of the lock mechanism. The lock mechanism is shaped and sized to automatically lock the sled to the pallet truck in a nested position when the pallet truck lifts the sled and to automatically unlock the sled from the pallet truck when the pallet truck sets the sled down enabling the pallet truck to be moved to un-nest the sled from pallet truck. According to one example, the lock mechanism comprises a pivoting arm on the sled and a hole on the pallet truck, and the pivoting arm comprises, on one end, a finger configured to enter the hole when the pallet truck and the sled enter the nested position.

Optionally, the pallet truck and the sled are electrically powered, and the combination further comprises an inductive charging coil in the pallet truck, configured to provide charge and an inductive charging coil in the sled positioned and configured to receive charge from the inductive charging coil in the pallet truck when the sled and the pallet truck are in a nested position.

In some additional, alternative, or selectively cumulative embodiments, the sled comprises two forks, the forks of the sled are configured to raise and to lower vertically, the sled comprises two powered hub wheels, the sled comprises a vertical back frame, and/or the sled comprises a one or more caster wheels whose headings can rotate.

In another embodiment, a method makes an in-building delivery of at least one palletized load from a truck. The method (1) maneuvers a pallet truck with a nested sled locked to the pallet truck into a bed of the truck, (2) picks up at least two palletized loads using the pallet truck with the nested sled and maneuvers the at least two palletized loads out of the bed of the truck to a position proximate a building entrance using the pallet truck with the nested sled; (3) sets the at least two palletized loads down using the pallet truck with the nested sled; (4) automatically unlocks the sled from the pallet truck; (5) separates the nested sled from the pallet truck; and (6) picks up at least one of the palletized loads using the sled and maneuvers the at least one of the palletized loads into the building using the sled.

Optionally, the method further involves unloading at least part of a palletized load at one or more target destinations in the building.

Optionally, the method further involves mechanically raising at least part of a palletized load to facilitate said unloading.

In some additional, alternative, or selectively cumulative embodiments of the method, the pallet truck comprises a first portion of a lock mechanism and the sled comprises a second portion of the lock mechanism, and unlocking the sled from the pallet truck comprises removing the second portion of the locking mechanism from the first portion of the locking mechanism automatically when the pallet truck sets the sled down.

According to some embodiments, the building is a convenience store and/or the at least one palletized load comprises beverages.

In yet another embodiment, a dual-use half-sized pallet comprises a rectangular deck and a plurality of feet. The rectangular deck has a top surface configured to hold and support a plurality of cases. The rectangular deck also has a long side and a short side. The plurality of feet extend below the top surface. The rectangular deck has a bottom side having a plurality of fork lift areas, wherein a first pair of fork lift areas is accessible by forks entering transverse to the long side, a second pair of fork lift areas is accessible by forks entering transverse to the long side, and a third pair of fork lift areas is accessible by forks entering transverse to the short side.

According to some embodiments, the rectangular deck has a thickness, and the first and third pairs of fork lift areas are approximately one thickness below the top surface, and the second pair of fork lift areas are below the top surface by an amount that is appreciably more than one thickness.

According to some embodiments, the first pair of fork lift areas are spaced apart laterally by a first distance, the third pair of fork lift areas are spaced apart laterally by the first distance, and the second pair of fork lift areas are spaced apart by a distance greater than the first distance.

According to some embodiments, the first and third pairs of fork lift areas are located to accommodate the pallet being carried by forks of a sled designed for in-building use, and wherein the third pair of fork lift areas are located to accommodate the pallet being carried by a pallet truck designed for warehouse, in-truck, and outside use.

According to some embodiments, the plurality of feet comprises a foot having a U-shape. The legs of the U extend down to ground level, and the base of the U extends partially down to an intermediate level above ground level.

As one skilled in the art will appreciate in light of this disclosure, certain embodiments of the lift trucks and designs therefor that are disclosed herein may be capable of achieving certain advantages, including, in some cases, one or more of the following: (1) combining the advantages of a pallet truck and a sled together; (2) improving efficiency of delivering goods into a building, such as, for example, beverages into a store; (3) reducing operator strain and physical exertion during the process of delivering items into a building; (4) providing a smaller footprint for two materials-handling vehicles to be stored in the floor space for a single vehicle; (5) enhancing maneuverability of a sled to better navigate tight spaces with smaller turning radii, especially in stores, especially space-constrained stores like convenience stores; (6) enabling turning of the sled in small areas, including providing a minimum or near-minimum turn radius; and (7) easing charging and recharging by facilitating (re)charging of both a sled and pallet truck via a single outlet and/or a single charger; and (8) providing pallets with improved flexibility of use, including the ability to be lifted by different machines in different orientations. The foregoing and other advantages of various embodiments will be apparent from the following detailed description of example embodiments, which proceeds with reference to the accompanying drawings, which are briefly introduced immediately below.

### BRIEF DESCRIPTION OF THE DRAWINGS

Figure 1 is an isometric exploded drawing of a pallet truck, mating sled, and two dual-use, half-sized pallets according to one embodiment.
Figure 2 is an isometric diagram of an unloaded pallet truck and sled in a nested configuration, according to one embodiment.
Figure 3 is a right side view of the unloaded pallet truck and sled in the nested configuration of Figure 2.
Figure 4 is a top view of the unloaded pallet truck and sled in the nested configuration of Figure 2.
Figure 5 is a front side view of the unloaded pallet truck and sled in the nested configuration of Figure 2.
Figure 6 is an isometric diagram of a pallet truck and sled in a nested configuration with two loaded pallets, according to one embodiment.
Figure 7 is a right side view of the pallet truck and sled in the nested configuration of Figure 6, with two loaded pallets.
Figure 8 is a top view of the pallet truck and sled in the nested configuration of Figure 6, with two loaded pallets.
Figure 9 is a front side view of the pallet truck and sled in the nested configuration of Figure 6, with two loaded pallets.
Figure 10 is an isometric diagram of a pallet truck and sled in a nested configuration with one loaded pallet, according to one embodiment.
Figure 11 is an isometric diagram of an unloaded pallet truck alone, according to one embodiment.
Figure 12 is a right side view of the unloaded pallet truck of Figure 11.
Figure 13 is a top view of the unloaded pallet truck of Figure 11.
Figure 14 is a front side view of the unloaded pallet truck of Figure 11.
Figure 15 is an isometric diagram of an unloaded sled alone, according to one embodiment.
Figure 16 is a right side view of the unloaded sled of Figure 15.
Figure 17 is a top view of the unloaded sled of Figure 15.
Figure 18 is a front side view of the unloaded sled of Figure 15.
Figure 19 is a rear side view of the unloaded sled of Figure 15.
Figure 20 is an isometric diagram of a sled alone with one loaded pallet resting on the ground, according to one embodiment.
Figure 21 is a top view of the sled of Figure 19.
Figure 22 is a right side view of the sled of Figure 19.
Figure 23 is a top view of the sled of Figure 19.
Figure 24 is a front side view of the sled of Figure 19, with one loaded pallet in a slightly raised position.
Figure 25 is a front side view of the sled of Figure 19, with one loaded pallet in a slightly raised position.
Figure 26 is an isometric diagram of a sled alone with one partially loaded pallet in a raised position, according to one embodiment.
Figure 27 is a right side view of the sled of Figure 26.
Figures 28A-31A are isometric diagrams of a pallet from various perspectives, according to one embodiment.
Figures 32A and 33A are side views of the pallet of Figures 28A-31A.
Figures 34A and 35A are top and bottom views, respectively, of the pallet of Figures 28A-33A.

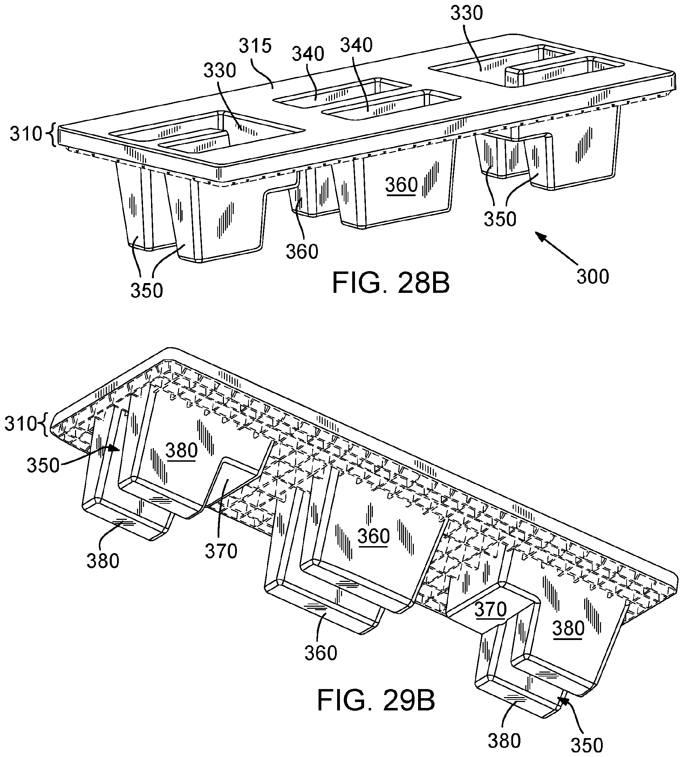

Figures 28B-31B are isometric diagrams of a pallet from various perspectives, according to another embodiment.

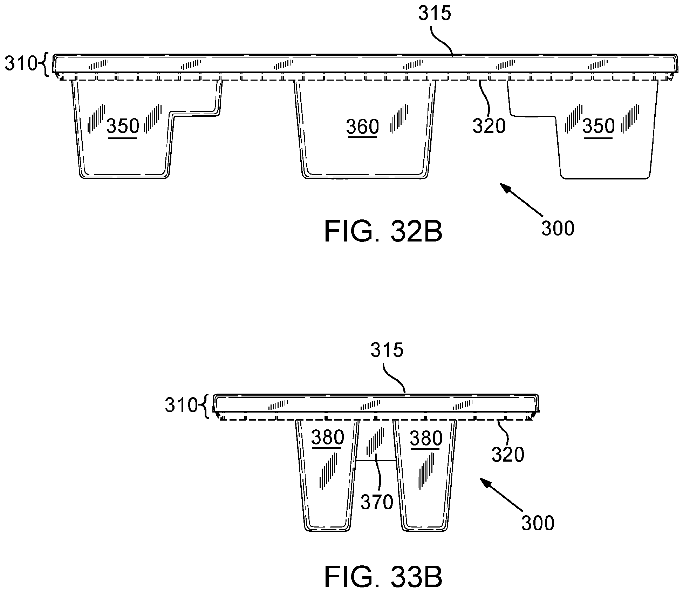

Figures 32B and 33B are side views of the pallet of Figures 28B-31B.

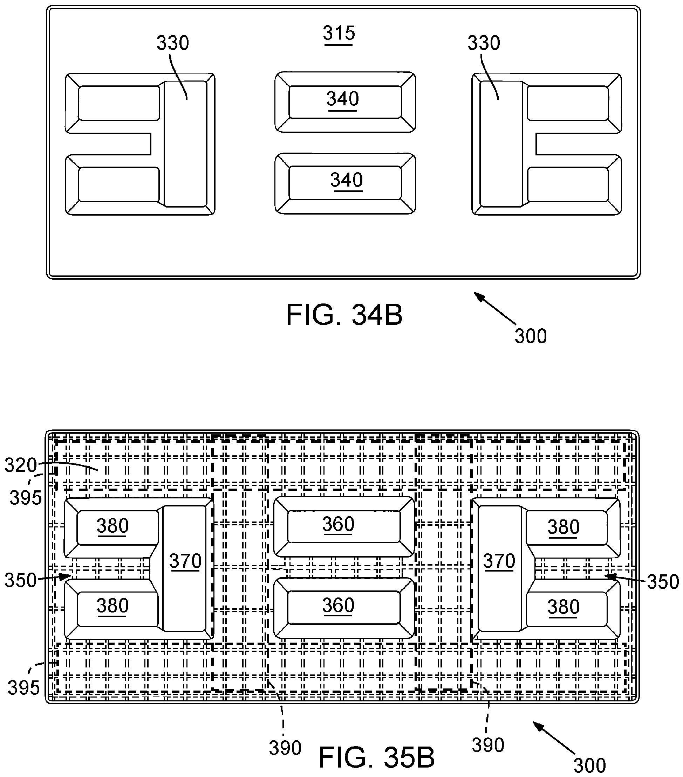

Figures 34B and 35B are top and bottom views, respectively, of the pallet of Figures 28B-33B.

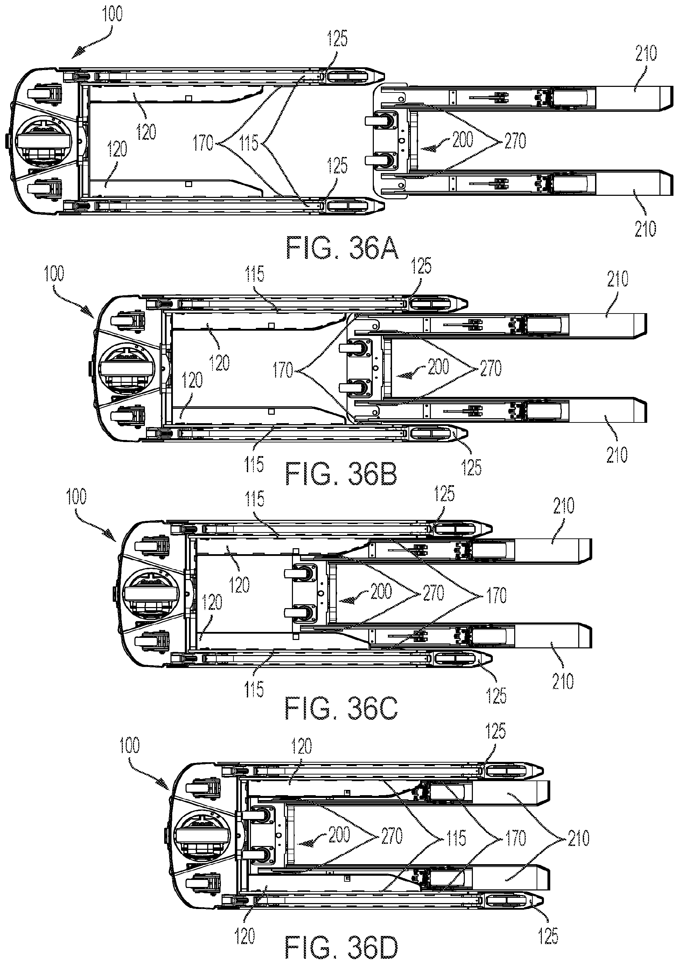

Figures 36A-36D are bottom views of a pallet truck and a sled in different stages of nesting together, according to one embodiment.

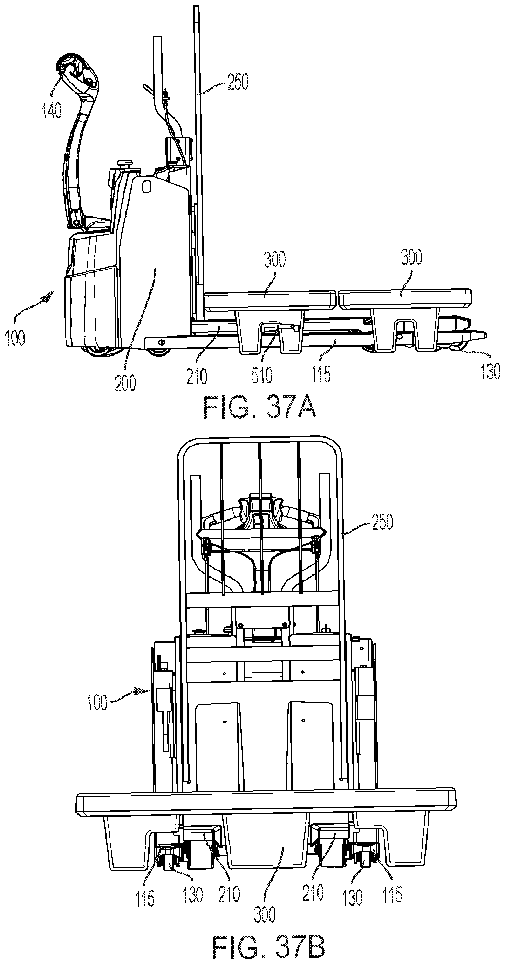

Figure 37A is a side view of a pallet truck and a sled, showing an internal locking mechanism in an unlocked position, according to one embodiment.
Figure 37B is a front view of the pallet truck and sled of Figure 37A.

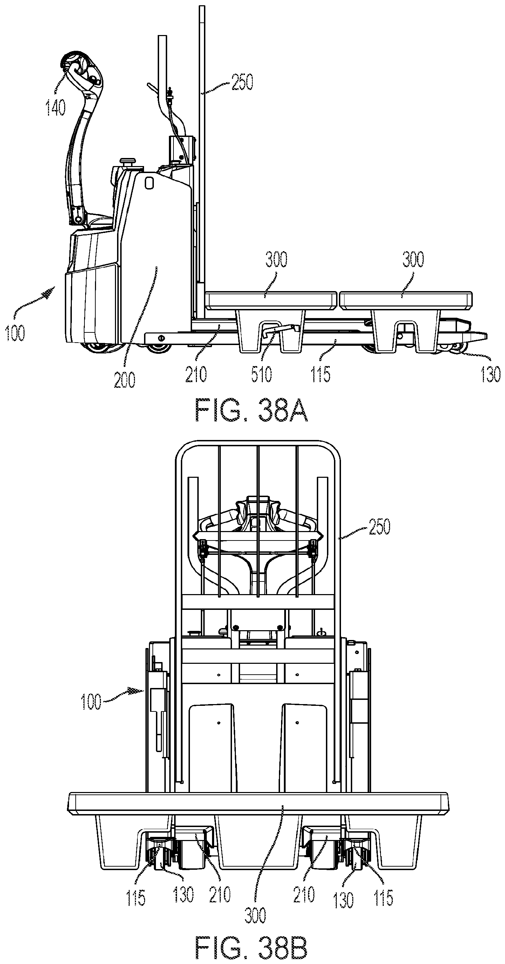

Figure 38A is a side view of a pallet truck and a sled, showing an internal locking mechanism in a locked position, according to one embodiment.
Figure 38B is a front view of the pallet truck and sled of Figure 38A.

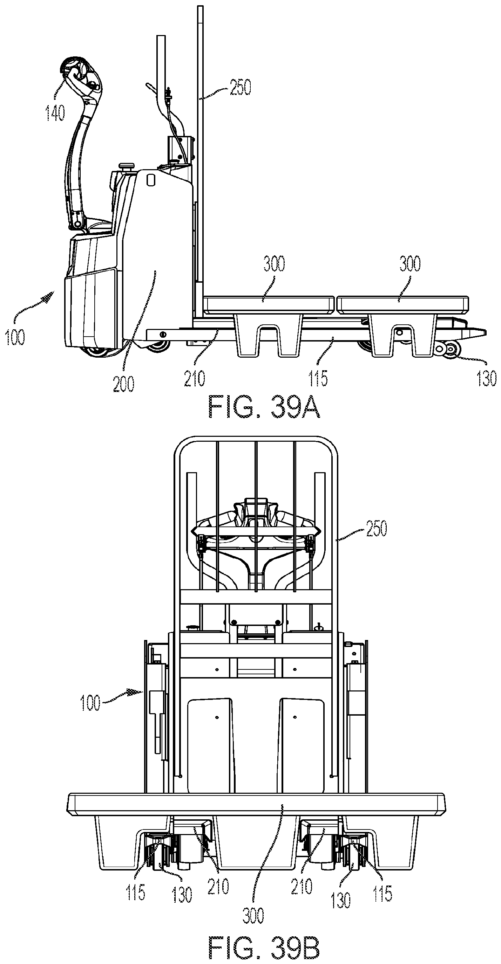

Figure 39A is a side view of a pallet truck and a sled, ready to lift pallets, according to one embodiment.
Figure 39B is a front view of the pallet truck and sled of Figure 39A.

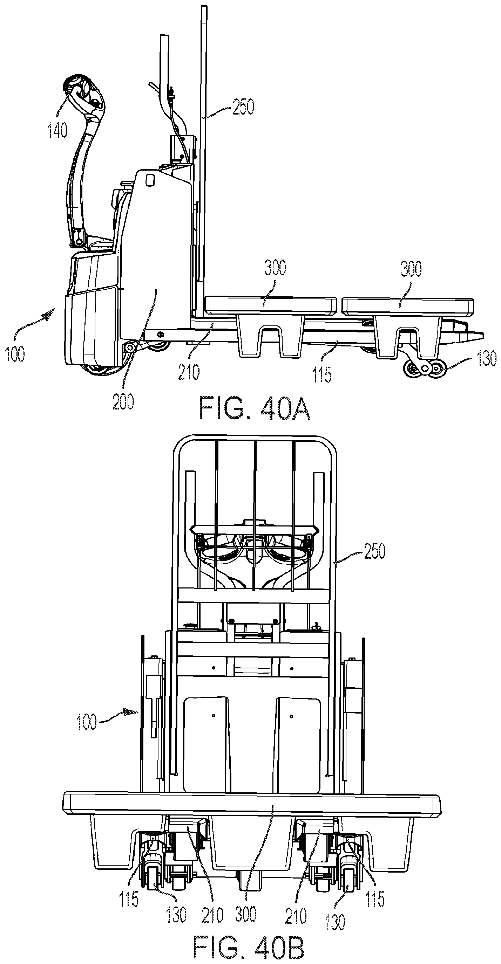

Figure 40A is a side view of a pallet truck and a sled lifting pallets, according to one embodiment.
Figure 40B is a front view of the pallet truck and sled of Figure 40A.

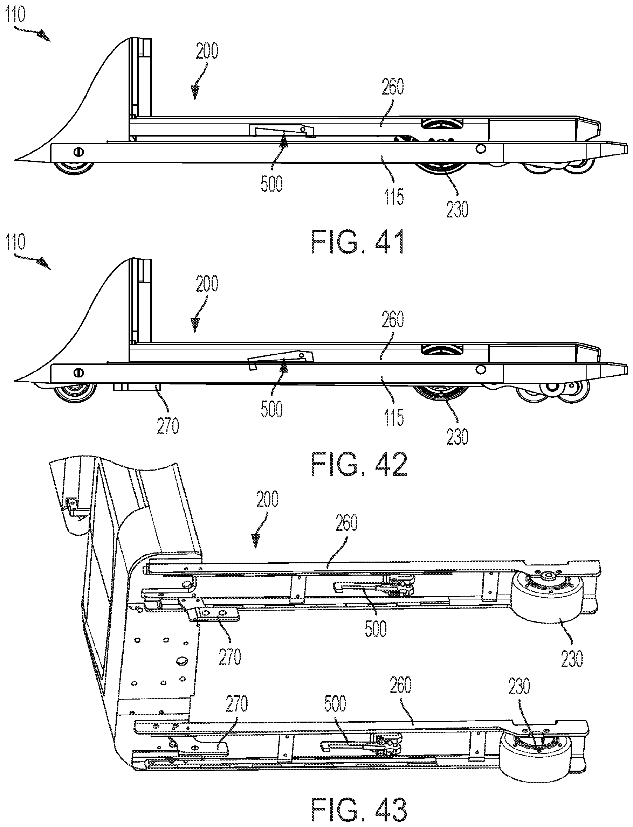

Figure 41 is a partial cut-away side view of a sled and pallet truck with a locking device in an unlocked position, according to one embodiment.
Figure 42 is a partial cut-away side view of a sled and pallet truck with a locking device in a locked position, according to one embodiment.
Figure 43 is an isometric view from a bottom perspective of a partially disassembled sled to reveal locking devices, according to one embodiment.

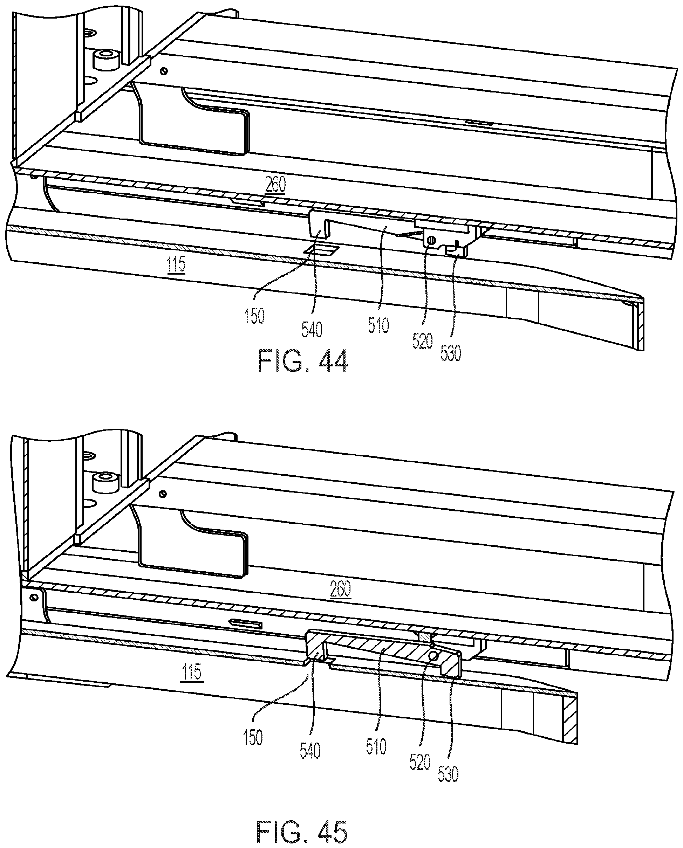

Figure 44 is an isometric partial cutaway view of a portion of a pallet truck and a sled, revealing a locking device in an unlocked position, according to one embodiment.
Figure 45 is another isometric partial cutaway view of a portion of a pallet truck and a sled, revealing a locking device in an unlocked position but on the verge of locking, according to one embodiment.

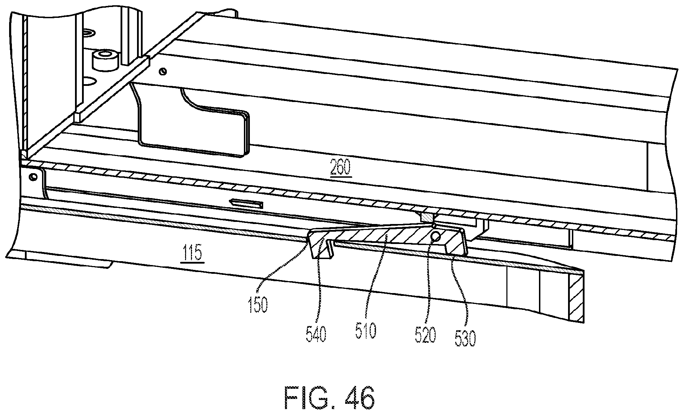

Figure 46 is another isometric partial cutaway view of a portion of a pallet truck and a sled, revealing a locking device in a locked position, according to one embodiment.

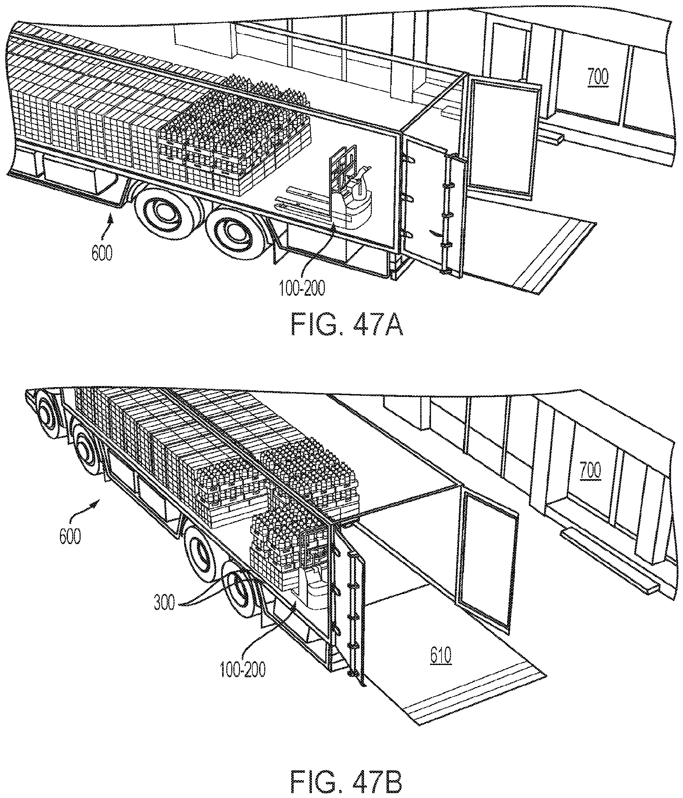

Figures 47A-47J illustrate a sequence of using a pallet truck and sled to deliver two pallets of load from a truck into a store.

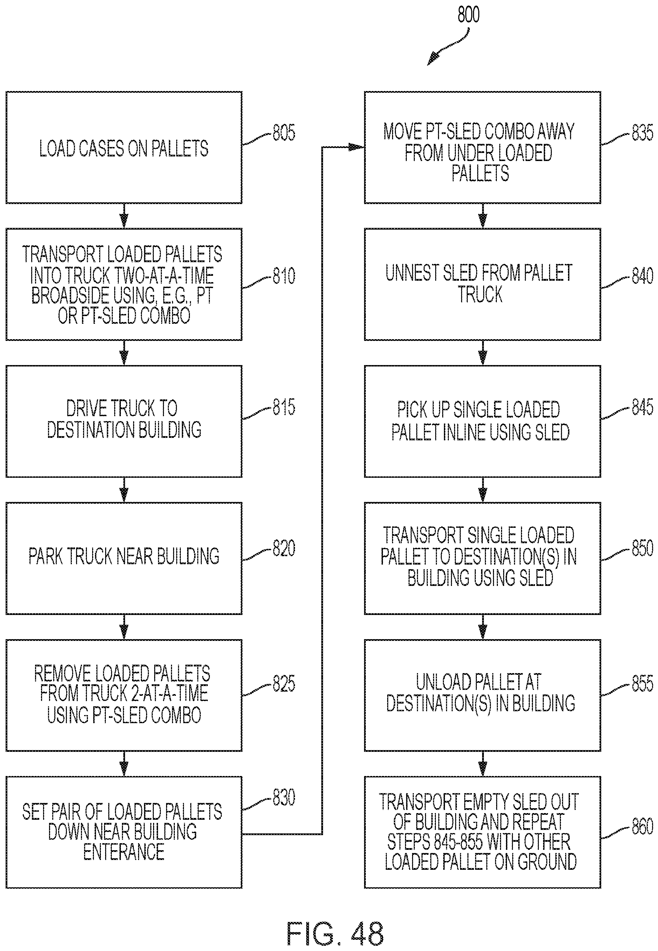

Figure 48 is a flowchart of a method according to one embodiment.

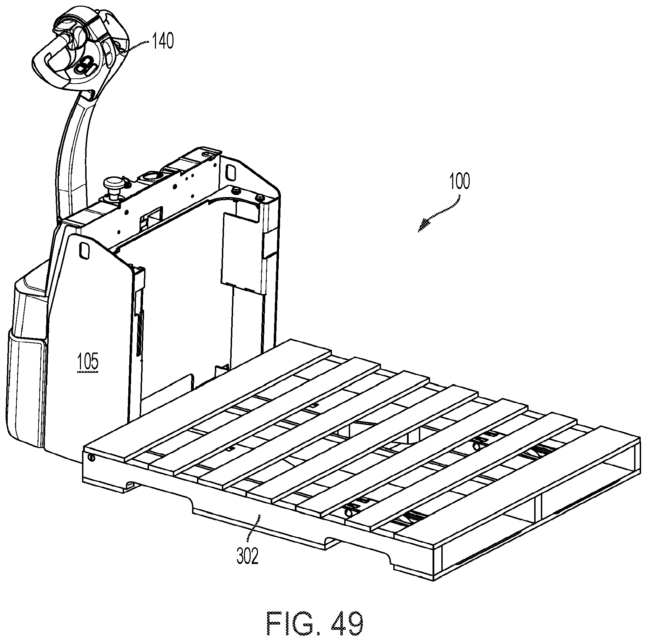

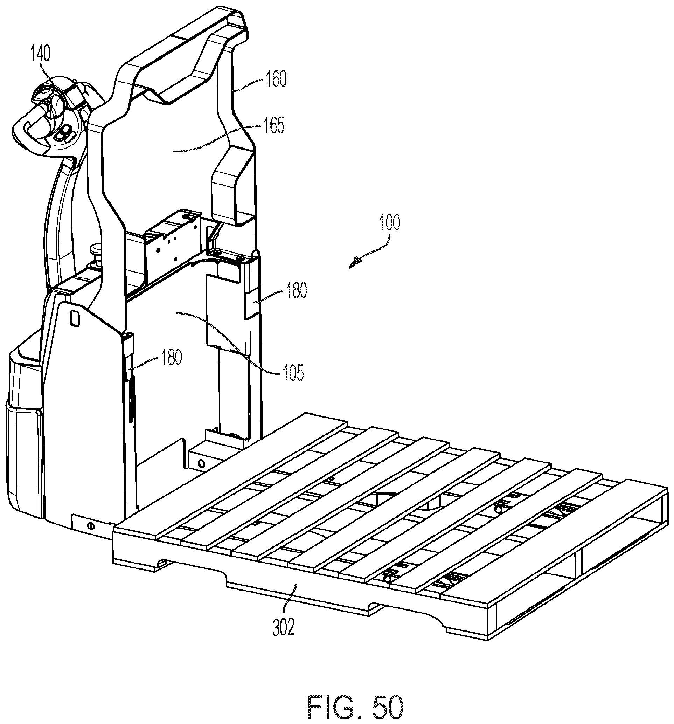

Figure 49 and 50 are isometric diagrams of a pallet truck alone engaged in a conventional pallet, according to some embodiments.

### DETAILED DESCRIPTION OF EMBODIMENTS

### Preliminary Notes

Example embodiments are described below with reference to the accompanying drawings. Unless otherwise expressly stated, the sizes, positions, etc., of components, features, elements, etc., as well as any distances therebetween, are not necessarily to scale, and may be disproportionate and/or exaggerated for clarity.

The embodiments described herein are merely examples, set forth by way of illustration only and not limitation. Those skilled in the art will recognize in light of the teachings herein that there are alternatives, variations and equivalents to the example embodiments described herein and their component parts. For example, other embodiments are readily possible, variations can be made to the embodiments described herein, and there may be equivalents to the components, parts, or steps that make up the described embodiments.

For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

The terminology used herein is for the purpose of describing particular example embodiments only and is not intended to be limiting. As used herein, the singular forms "a," "an" and "the" are intended to include the plural forms as well, unless the context clearly indicates otherwise. It should be recognized that the terms "comprise," "comprises," "comprising," "include," "includes," "including," "has," "have," and "having," when used in this document, are open-ended and specify the presence of stated features, integers, steps, operations, elements, and/or components, but do not preclude the presence or addition of one or more other features, integers, steps, operations, elements, components, and/or groups thereof. Unless otherwise specified, a range of values, when recited, includes both the upper and lower limits of the range, as well as any sub-ranges therebetween. Unless indicated otherwise, terms such as "first," "second," etc., are only used to distinguish one element from another and not to imply any relative order, placement, or ranking. For example, one element could be termed a "first element" and similarly, another element could be termed a "second element," or vice versa. The same is true of labels like (a), (b), (c) or (1), (2), (3), etc. The section headings used herein are for organizational purposes only and are not to be construed as limiting the subject matter described.

Unless indicated otherwise, the terms "about," "thereabout," "substantially," etc. mean that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art.

Spatially relative terms, such as "right," left," "below," "beneath," "lower," "above," and "upper," and the like, may be used herein for ease of description to describe one element's or feature's relationship to another element or feature, as illustrated in the drawings. It should be recognized that the spatially relative terms are intended to encompass different orientations in addition to the orientation depicted in the drawings. For example, if an object in the figures is turned over, elements described as "below" or "beneath" other elements or features would then be oriented "above" the other elements or features. Thus, the term "below" can, for example, encompass both an orientation of above and below. An object may be otherwise oriented (*e.g.*, rotated 90 degrees or at other orientations) and the spatially relative descriptors used herein may be interpreted accordingly.

Unless clearly indicated otherwise, all functional or operative connections may be direct or indirect. Similarly, unless clearly indicated otherwise, all physical connections may be rigid or non-rigid, permanent or temporary, direct or indirect *(e.g.,* via intermediary components).

Like numbers refer to like elements throughout. Thus, the same or similar numbers may be described with reference to other drawings even if they are neither mentioned nor described in the corresponding drawing. Also, even elements that are not denoted by reference numbers may be described with reference to other drawings. Additionally, the drawings may include non-essential elements that are included only for the sake of thoroughness. These non-essential elements may be removed entirely or left only in outline form if drawing changes are desired to create greater clarity.

Not every feature shown in every drawing is labeled with a reference number, even though the same feature may be labeled with a reference number on other drawings. Reference numbers have been omitted where it is believed they would unnecessarily clutter a drawing. However, all rights are reserved to add reference numbers to the drawings to clarify aspects of the embodiments. Moreover, some views omit some features shown in other views. Finally, the drawings sometimes illustrate variations from one drawing to another, even where those drawings are intended to depict the same embodiment.

### Overall System

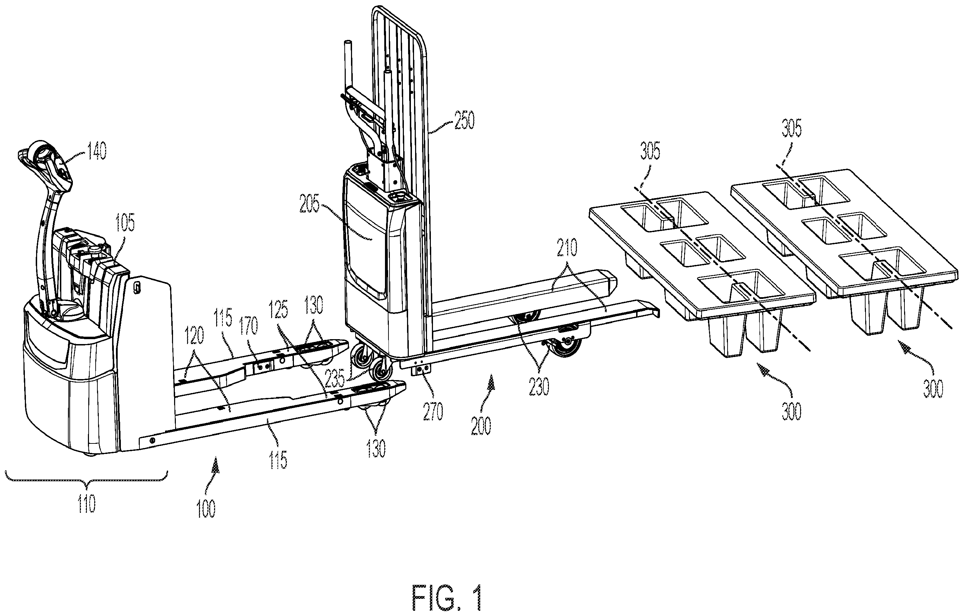

Figure 1 is an isometric drawing of a pallet truck 100, mating sled 200, and two dual-use, half-sized pallets 300 in an aligned but spaced-apart arrangement, according to one embodiment. An operator end 205 of the sled 200 is designed to mate with a wall 105 of a body 110 of the pallet truck 100. Forks 210 of the sled 200 are sized and located to go above forks 115 of the pallet truck 100. The forks 115 include wide inner support sections 120 and thinner outer sections 125. A locking mechanism (an example of which is described in more detail below) can lock the sled 200 to the pallet truck 100 when the sled 200 is in a fully nested position on and against the pallet truck 100 and the pallet truck 100 lifts the sled 200 off the floor. Figure 1 also illustrates skid plates 170 and 270, which are examples of alignment features that aid in aligning the sled 200 within the pallet truck 100, as described in more detail later in this document.

The pallets 300 are shown in Figure 1 oriented such that their longitudinal axes 305 are transverse to the forks 115 and 210. This will be referred to herein as a "broadside" orientation of a pallet 300 with respect to the pallet truck 100 and/or the sled 200. In this broadside orientation, the sled 200 and the pallet truck 100 can carry two pallets 300, according to this particular illustrated embodiment. As will be explained later in this document, the sled 200 and the pallet 300 are also designed such that the sled 200 can carry a single pallet 300 oriented perpendicularly to the broadside arrangement, referred to herein as an "inline" orientation.

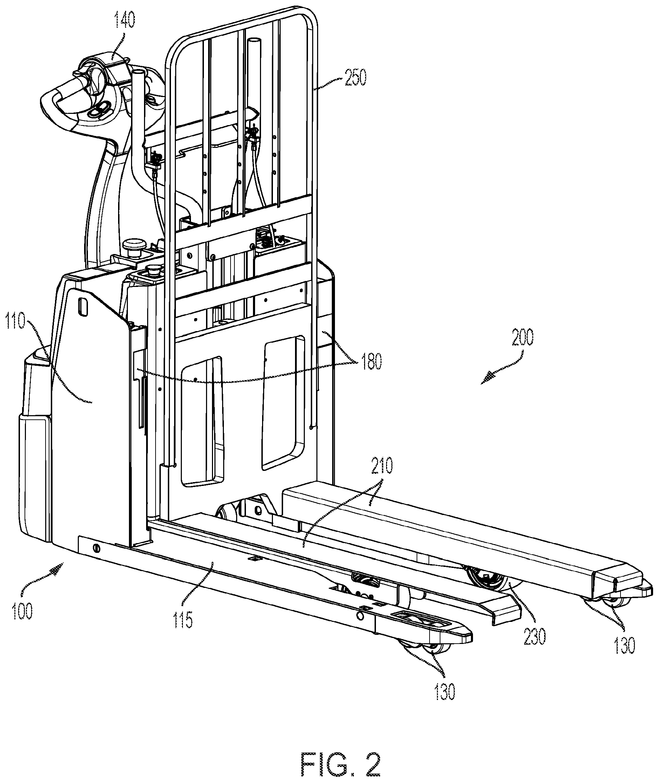

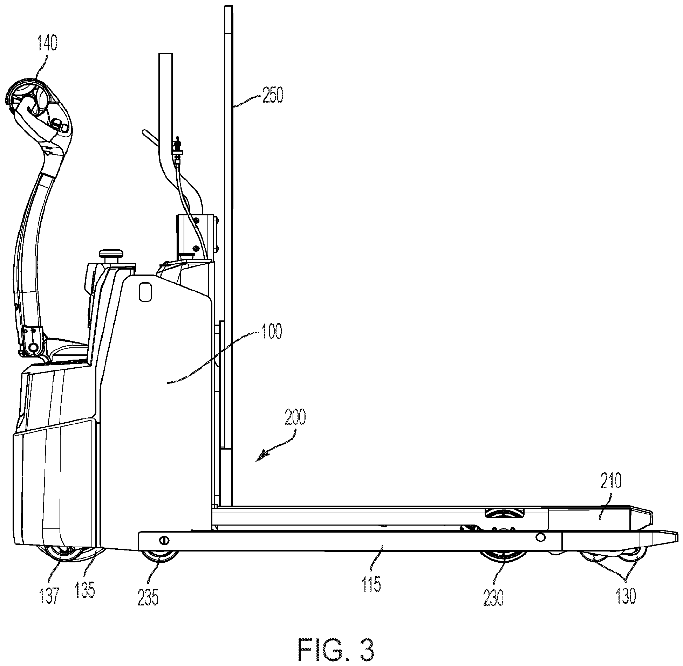

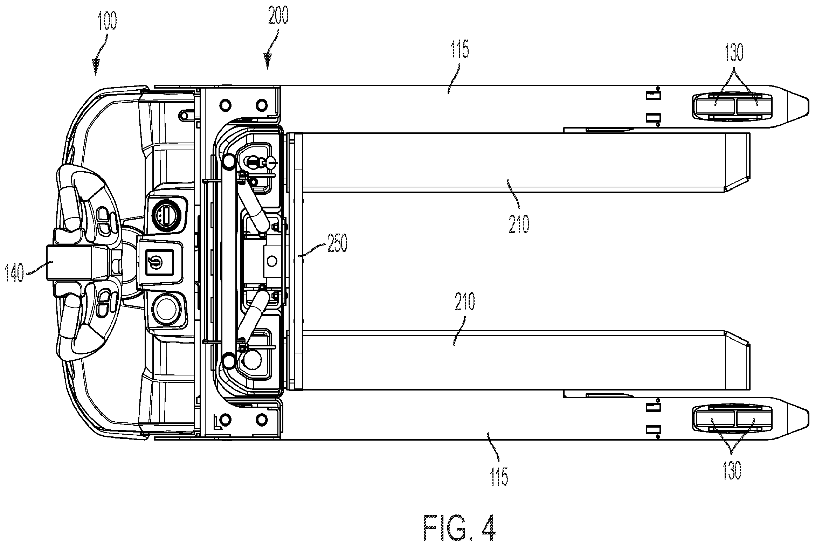

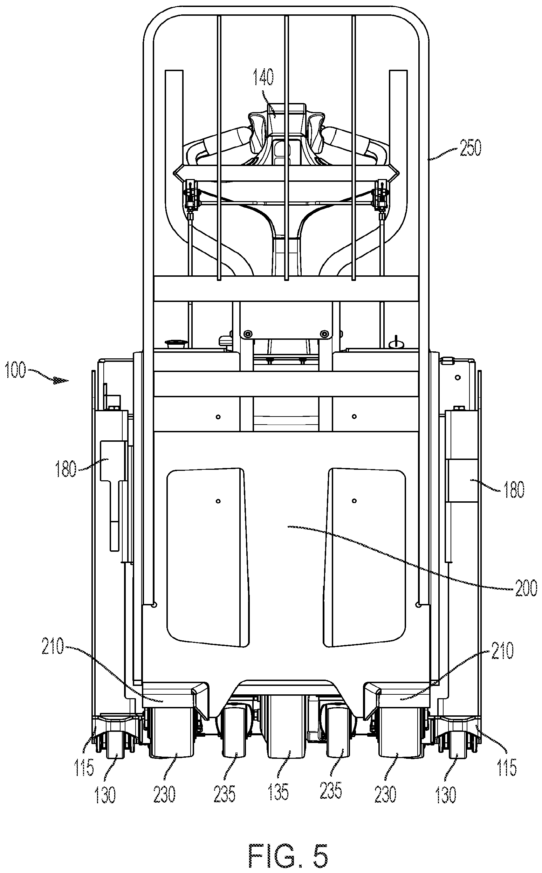

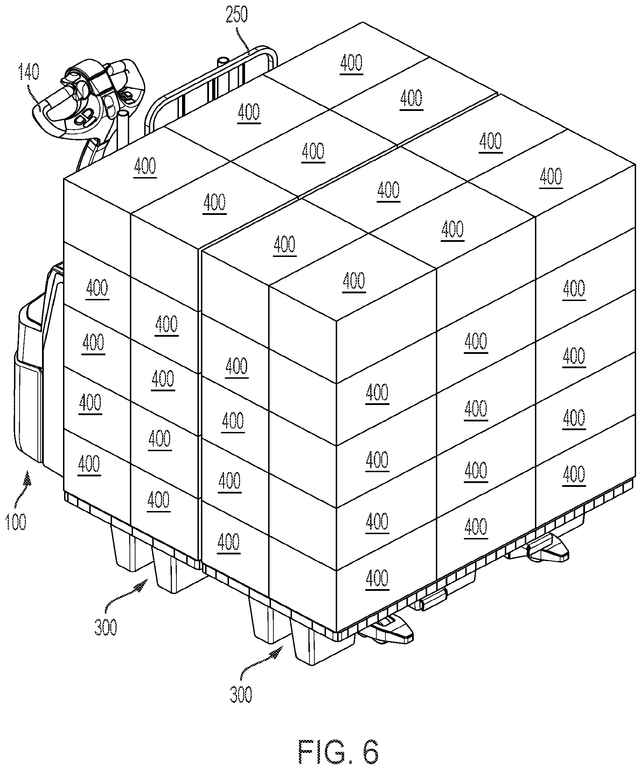

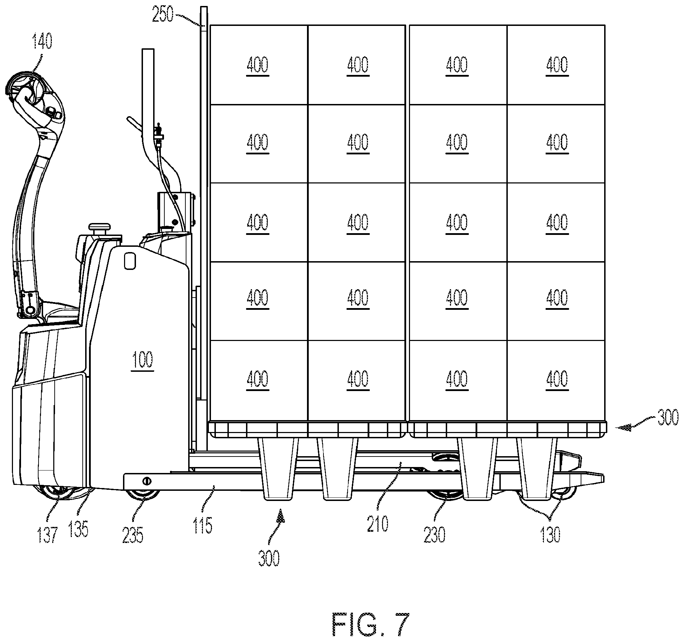

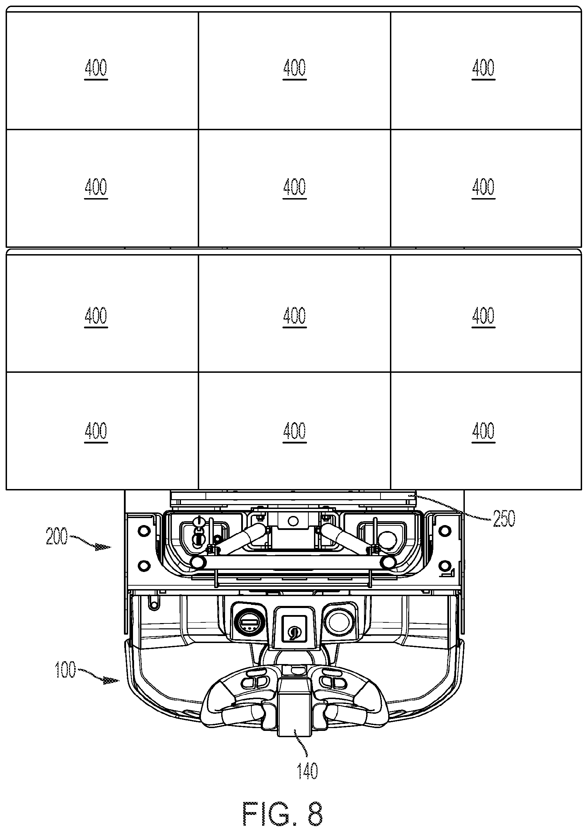

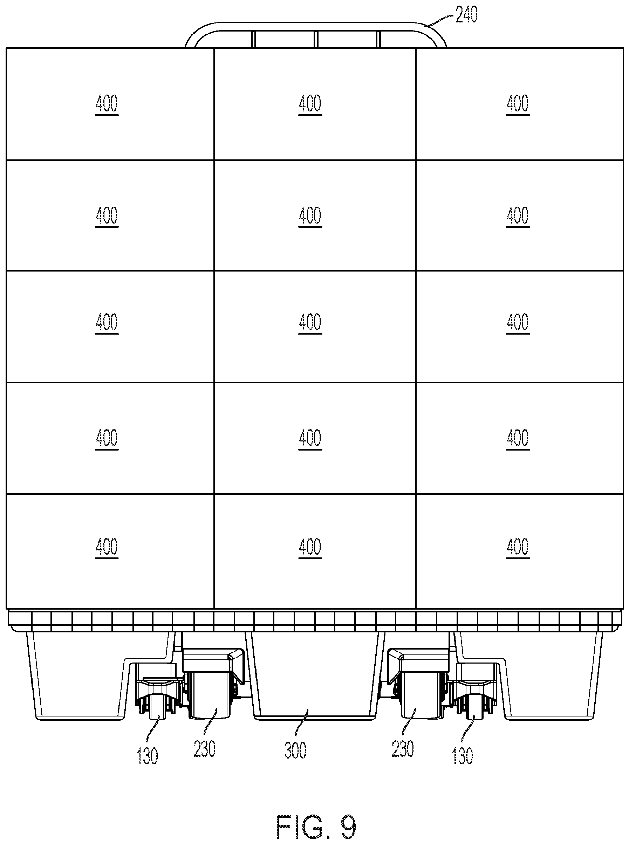

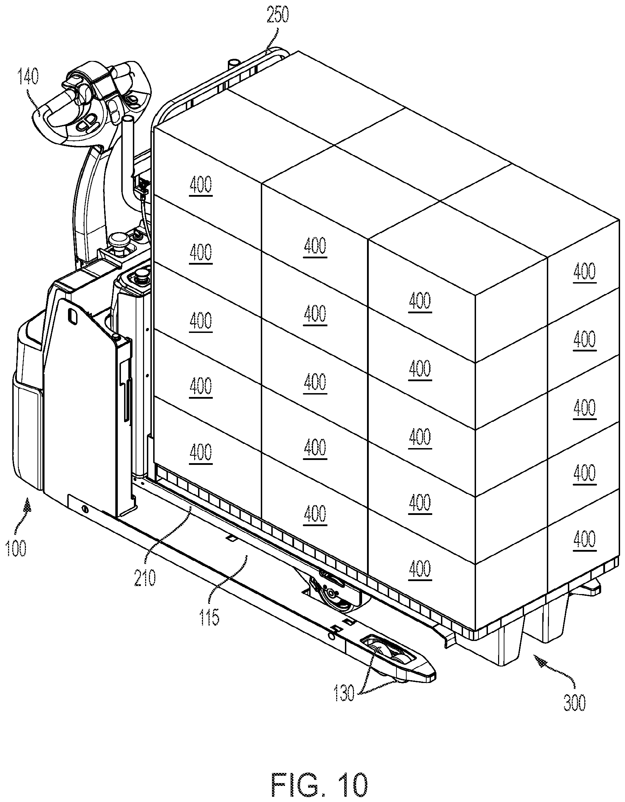

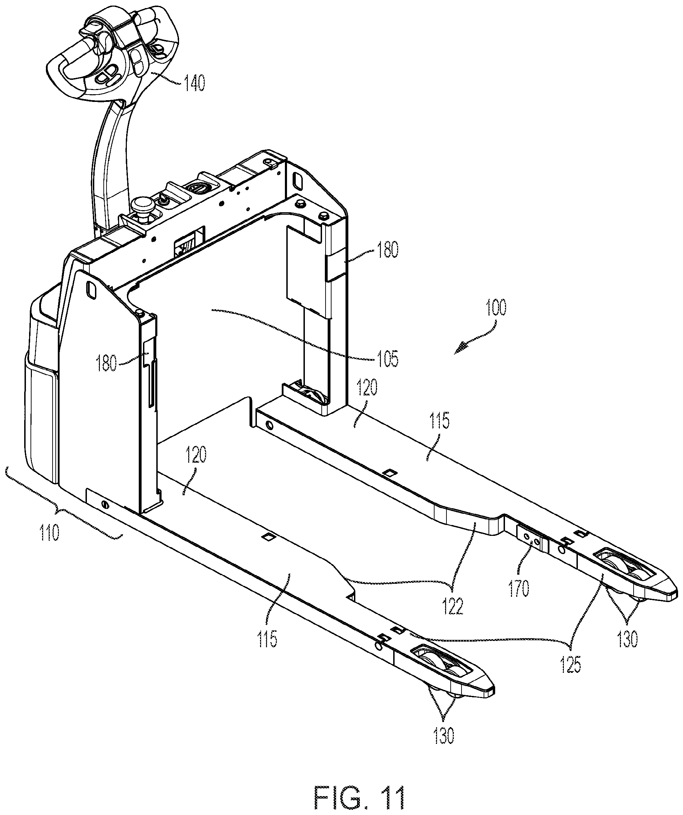

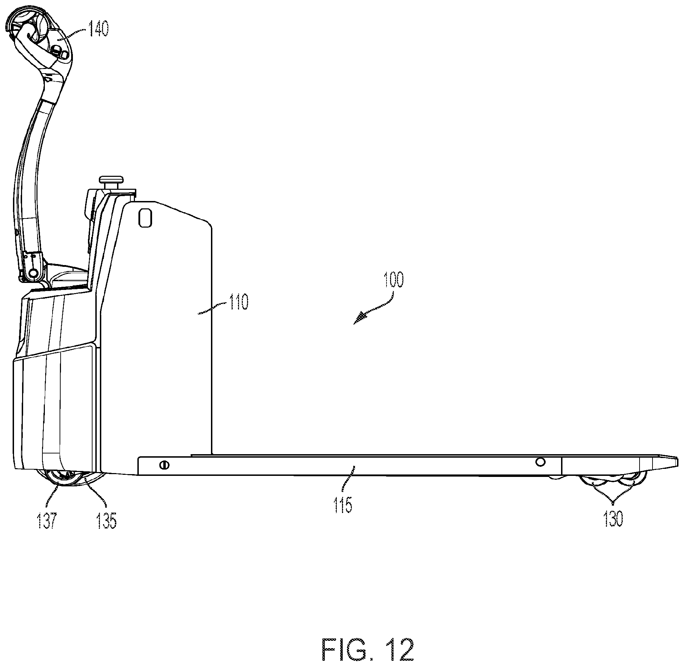

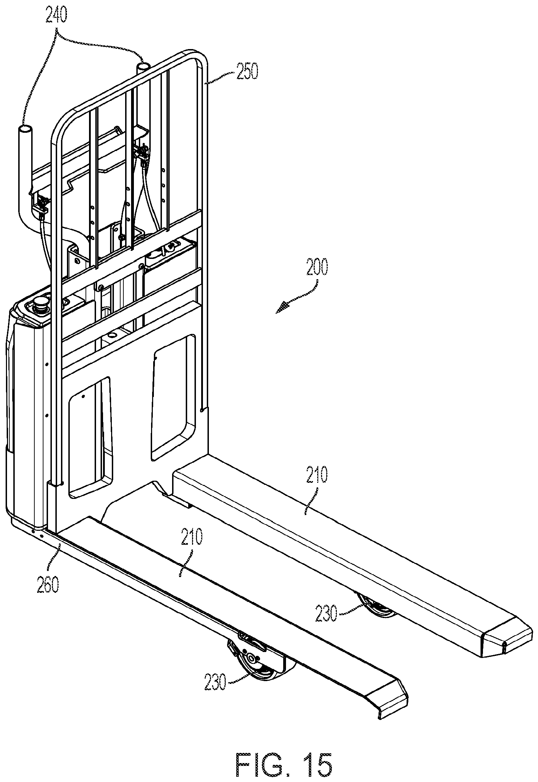

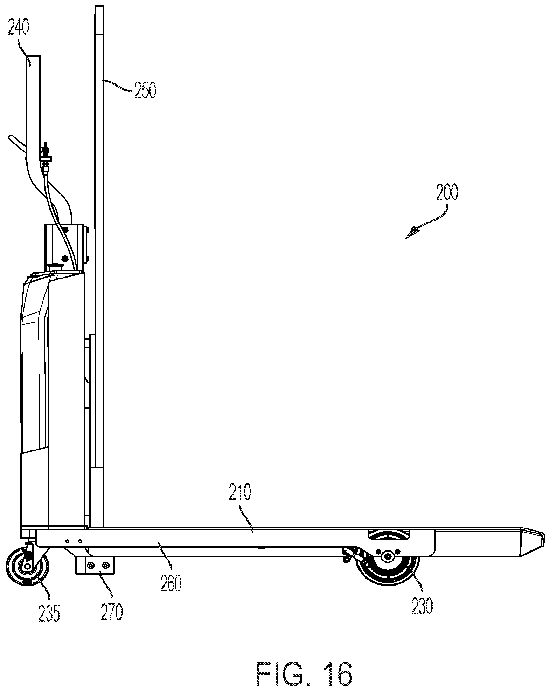

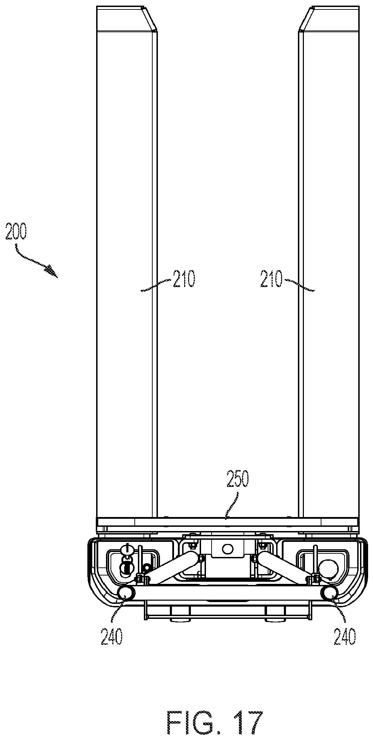

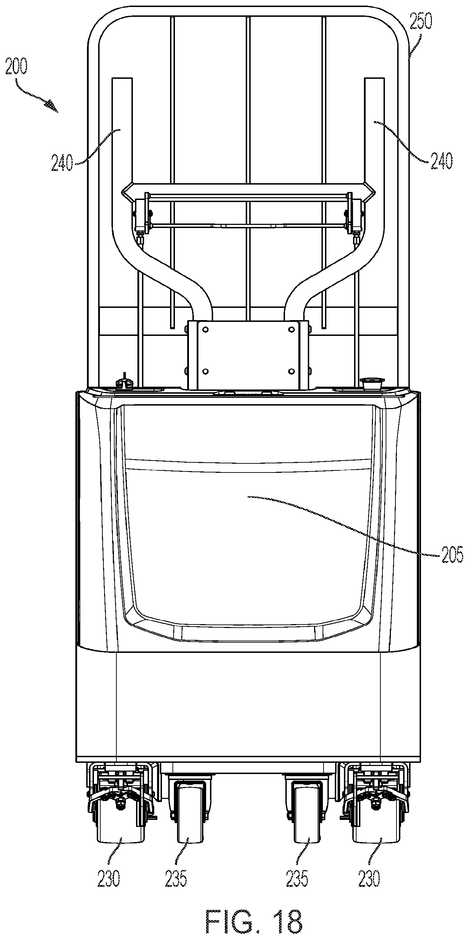

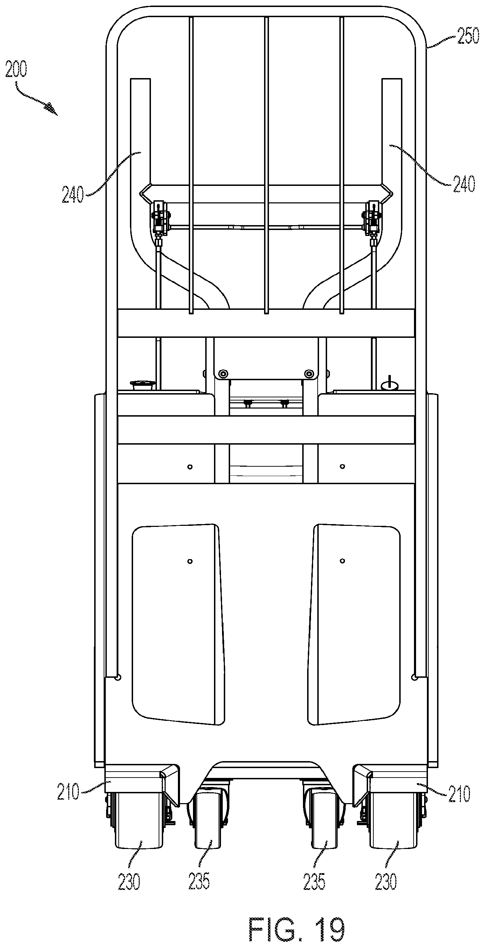

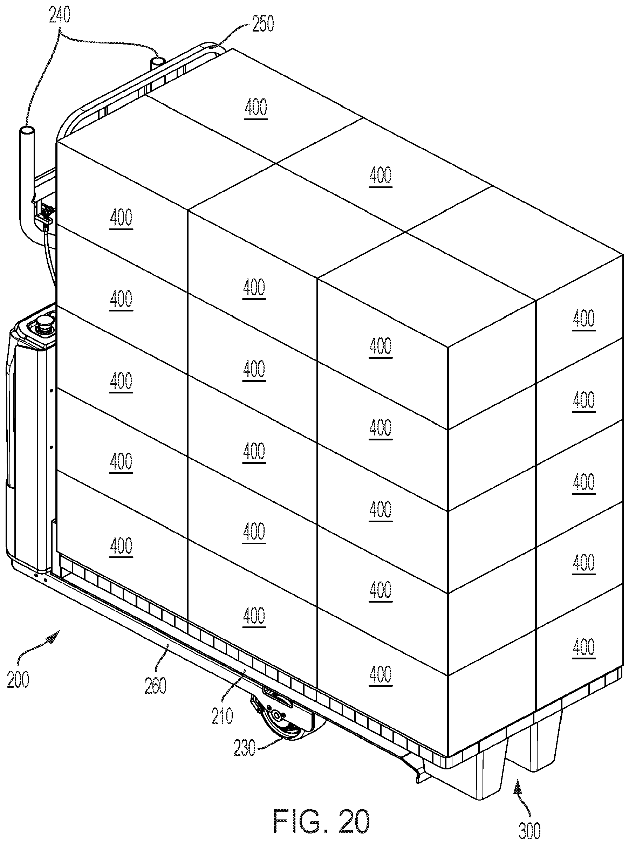

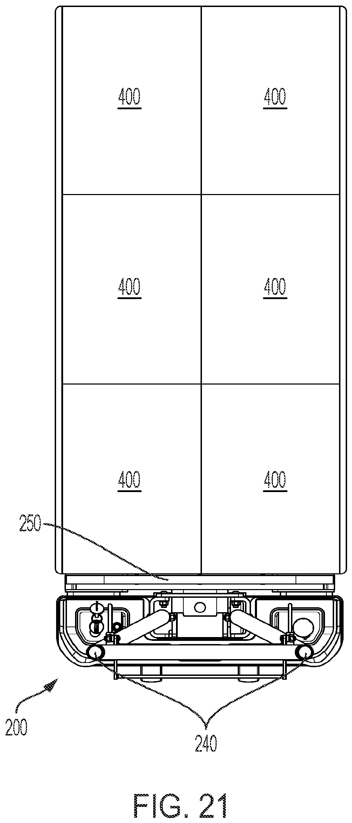

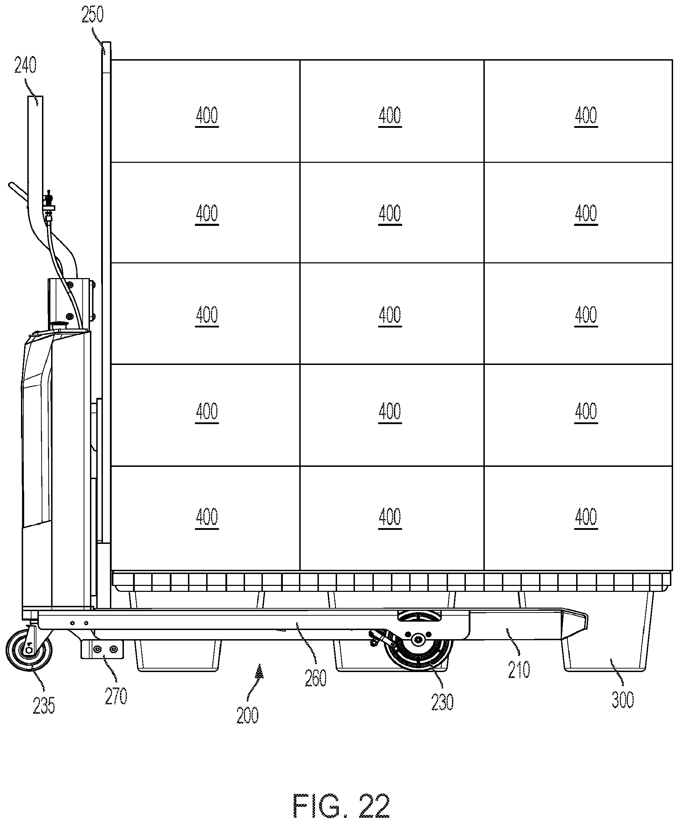

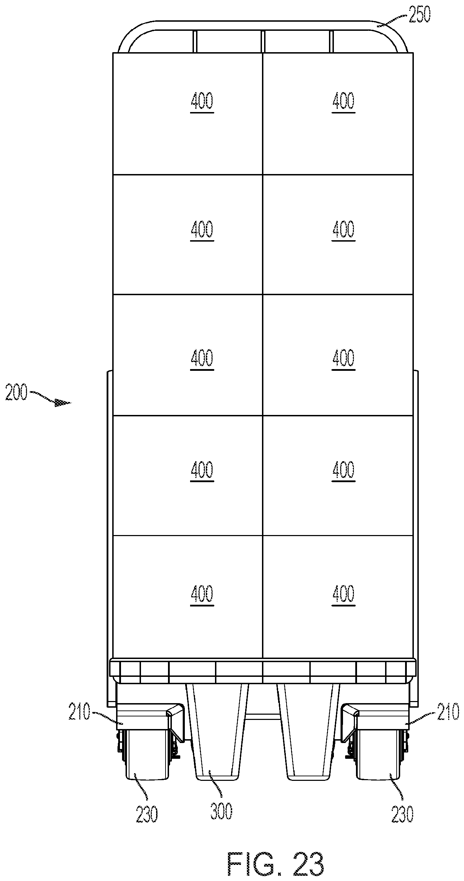

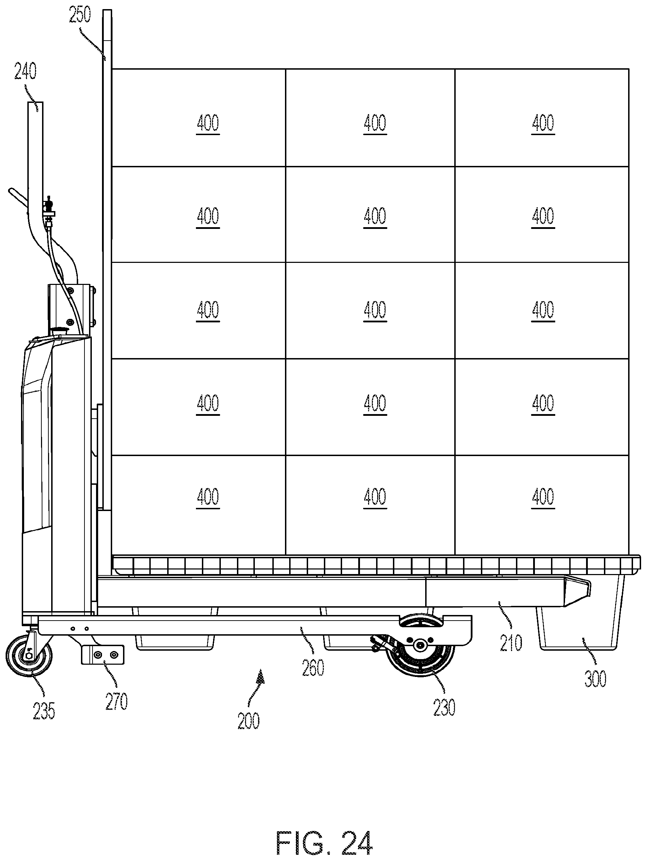

Figures 2-27 illustrate the pallet truck 100 and the sled 200 either individually or together, with and without loaded pallet(s), from various views and perspectives. In particular, Figures 2-5 illustrate the pallet truck 100 and the sled 200 nested together without any pallets in an isometric view, right (from the vantage of the operator) side view, top view, and fork-protruding side view, respectively. Figures 6-9 are like Figures 2-5, respectively, but with two loaded pallets 300 in the broadside orientation. Figure 10 shows the pallet-truck-sled combination 100-200 positioned below a single pallet 300 in the inline orientation. Figures 1-10 show the pallet truck 100 in a lowered position to facilitate sliding under the sled 200. Figures 11-14 illustrate the pallet truck 100 alone in an isometric view, right) side view, top view, and fork-protruding side view, respectively. Figures 15-19 illustrate the sled 200 alone in an isometric view, right side view, top view, fork-protruding side view, and operator-end side view respectively. Figures 20-23 are similar to Figures 15-19 but with one loaded pallet 300 in the inline orientation. Figures 24-27 illustrate the sled 200 lifting the pallet 300 off the floor to different heights.

The pallet truck 100 and the sled 200 may be electrically powered using batteries (not shown). In the nested configuration of Figures 2-10, the pallet truck 100 can optionally inductively charge the sled 200. An inductive coil (not show) behind the sled-facing wall 105 of the body 110 of the pallet truck 100 can inductively couple with an inductive coil (not shown) behind a panel in the body of the operator end 205 of the sled 200. The inductive coil in the pallet truck 100 can induce charge in the inductive coil of the sled 200 to charge the battery in the sled 200. With such inductive charging, the sled 200 can use a lower-capacity, lighter battery, which in turn makes the sled 200 lighter, easier to handle, and less likely to damage a store floor. Alternatively, a cable can be used to charge the sled 200 from the pallet truck 100, and a pocket or other compartment can be provided on one or more of the pallet truck 100 and the sled 200 to store one or more charging cables when not in use. Whether the charging from the pallet truck to the sled is wired or wireless, it can be beneficial that just one electrical outlet and just one on-board charger are needed to charge both the pallet truck 100 and the sled 200.

The pallet truck 100, as illustrated here, includes two pairs of load wheels 130 - two on or near the distal (tip or toe) end of each fork 115 - a center steerable wheel 135 at or near the middle of the operator (rear) end and two caster wheels 137 on the left and right of the rear end. The caster wheels 137 can enhance lateral stability of the pallet truck 100 but they can be omitted. More or less load wheels can be included on the forks 115. For example, a single load wheel 130 on each fork 115 may suffice; the more distal load wheel 130, when present, may be an entry roller. In operation, the load wheels 130 are activated by known pneumatic, hydraulic, electric, or other means to press down against the floor and thereby raise the forks 115 to lift a load off the floor to facilitate movement of the load.

The center steerable wheel 135 is a traction wheel that can be powered to assist moving the pallet truck 100, especially when loaded and/or when going up a slope. The center steerable wheel 135 can pivot in response to lateral movement of the tiller 140 to provide steering. The single center steerable wheel 135 can alternatively be a set of two or more wheels.

The sled 200, as illustrated here according to this example embodiment, includes two load wheels 230 - one under each fork 210 - and two rear caster wheels 235. The load wheels 230 may include hub motors to aid in moving the sled 200, especially when loaded and/or when going up a slope. That is the load wheels 230 may be powered to rotate forward and/or backward to move the sled or aid in moving the sled. The load wheels 230 are preferably broad and/or feature soft rubber tires (solid or air-filled) to distribute their weight across a larger area to as to less likely damage floors in stores. The two rear caster wheels 235 may alternatively be replaced by a single wheel, but the two-wheel design may mate better with the single center steerable wheel 135 of the pallet truck 100, depending on the placement of the wheels, and two wheels reduce pressure on the floor by a factor of two compared to one equal-sized wheel.

The forks 115 of the pallet truck 100 and the forks 210 and horizontal base legs 260 of the sled 200 and the load wheels 230 thereon are sized, shaped, and located to enable mating in a nested configuration, one example of which is illustrated in Figures 1-10. According to the illustrated embodiment, the forks 115 of the pallet truck fit under horizontal base legs 260, which connect at their proximal end to the upright portion of the sled 200 and sit below the forks 210 of the sled 200. In particular, the short inner support sections 120 of the forks 115 of the pallet truck 100 fit under the horizontal base legs 260. The sled load wheels 230, which may be motorized hub wheels, are located at or near the load center in the distal direction so as to minimize the turning radius of the sled 200, as the sled 200 turns by pivoting about the midpoint between the two load wheels 230.

The short inner support sections 120 of the forks 115 of the pallet truck 100 may optionally have a slanted or tapered distal end, as shown in the drawings, to aid in aligning the sled 200 with the pallet truck 100 when they come together in a nested configuration. Other features can aid in the alignment of the sled 200 and the pallet truck 100, as described in more detail elsewhere in this document. The slanted/tapered inner portions of the forks 115 cooperate with the caster wheels 235, skid plates, or other features on the sled 200 to align the sled 200 with the pallet truck 100 as the caster wheels 235 enter the area between the forks 115, initially wider apart at the distal end and then closer together at the proximate end. In one embodiment, skid plates or other alignment features are spaced apart on the sled 200 and the forks 115 on the pallet truck 100 are spaced apart at the proximate end such that the skid plates or other features fit snugly between the forks 115 at their proximate end.

The pallet truck 100 includes a tiller 140 that can be used by an operator to steer the pallet truck 100. The tiller 140 is linked to the center steerable wheel 135 by known means to control the heading of the center steerable wheel 135. The tiller 140 may include operator controls in the form of buttons, levers, twist grips, etc. to control features of the pallet truck 100. For example, a throttle control to actuate powered rolling may be provided. A deadman control may also be provided, for example. As another example, one or more controls to actuate lifting of the forks 115 may also be provided. In addition, controls for pre-programmed fork heights, as explained more below, can also be provided.

The pallet truck 100 may optionally include one or more pockets, compartments, or slots 180 to store charging cables. As explained in more detail elsewhere in this document, a charging cable or cord may be used to plug into a wall outlet on one end and the pallet truck 100 on the other end to charge the pallet truck 100, while another charging cable or cord can be connected between the pallet truck 100 and the sled 200 to charge the sled 200. In this way, both the pallet truck 100 and the sled 200 can be charged using a single wall outlet.

The sled 200 has a back frame 250, which can help stabilize a load, especially a tall load, on the sled forks 210. An operator may use one or more straps (not shown) to secure the load to the back frame 250, if desired.

Figures 6-9 illustrate the pallet truck 100 and the sled 200 nested together with two loaded pallets 300 in an isometric view, right side view, top view, and fork-protruding side view, respectively. Each of the two pallets 300 in Figures 6-10 is illustrated carrying 30 items 400 stacked in five layers, where each layer is a 2x3 arrangement. Other arrangements of items on the pallets 300 are possible. Each item 400 may be, for example, a case of beverages, food, or other merchandise. An item 400 may be considered a "case equivalent" (roughly equivalent in terms of size, shape, volume, and/or mass) regardless of its actual contents.

Figure 10 depicts the combination of the pallet truck 100 and the nested sled 200 in position to pick up a single pallet 300 in the inline orientation. As shown here, the pallet 300 carries 30 cases 400 in five 2x3 layers. As explained in more detail below, the bottom side of the pallet 300 is designed to be carried by the sled 200 (and thus the nested pallet-truck-100-sled-200 combination) in either the broadside or inline orientation and by the pallet truck 100 alone in either orientation. Concomitantly, the forks 115 and 210 are arranged to fit under and lift a pallet 300 in both the broadside and inline orientations.

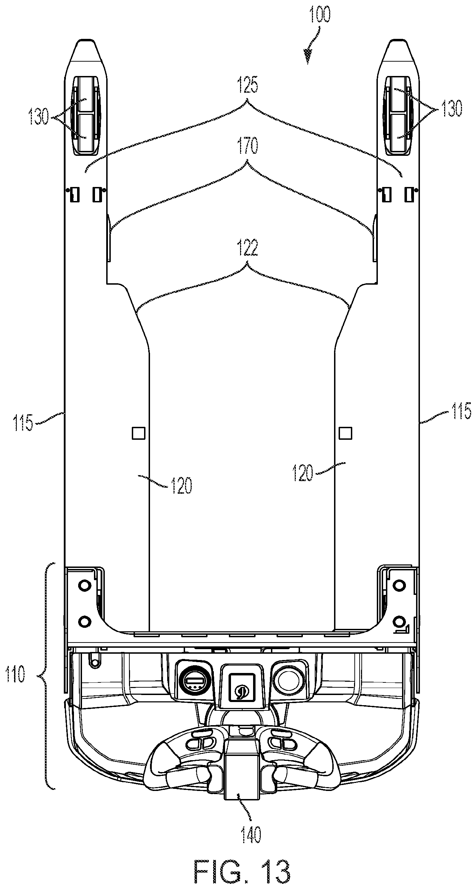

Figures 11-14 illustrate the pallet truck 100 alone in an isometric view, right side view, top view, and fork-protruding side view, respectively. As can be seen in Figures 11 and 13, the forks 115 have a distal section 125 and an inwardly wider section 120 at or near its proximal end (nearer to the body/chassis 110). This arrangement with a wider opening at the distal end of the forks and a narrower opening at the proximate end of the forks can aid in aligning the sled 200 in and on the pallet truck 100. As shown in these drawings, there is also a taper or slant 122 between the distal section 125 and the inwardly wider section 120. While the taper 122 is optional, it can also aid in aligning the sled 200 in and on the pallet truck 100. Alternatively, there may be no taper 122, in which case each fork 115 would have a Utah-shape. Other shapes of the forks 115 are possible, and the two forks 115 need not be symmetrical as shown.

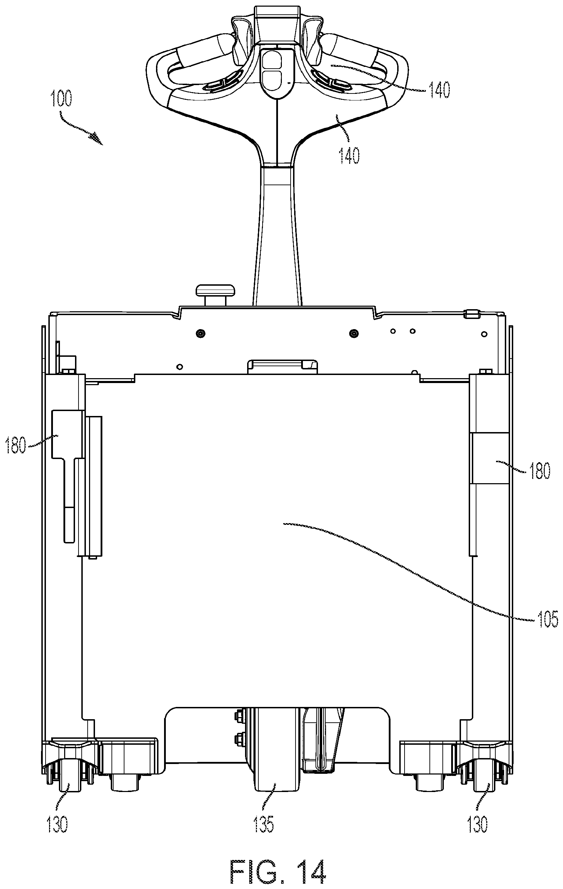

Note that Figure 14 does not include the caster wheels 137, to illustrate that they are optional and may be omitted in some designs of the pallet truck 100.

Figures 15-19 illustrate the sled 200 alone in an isometric view, right side view, top view, and fork-protruding side view, respectively. Figures 15-19 show two handles 240, which can be grabbed by the operator's hands to push or pull and steer the sled 200. The caster wheels 235 can pivot to provide steerability in response to sideways force applied by the operator (preferably via the handles 240). The load wheels 230 are attached near the distal end of the horizontal base legs 260, which connect at their proximal end to the upright portion of the sled 200. As illustrated here, the forks 210 rest on or just above the horizontal base legs 260 when the forks are in their lowered position. As illustrated and described below, the forks 210 (and other components such as the back frame 250) can be raised above the horizontal base legs 260.

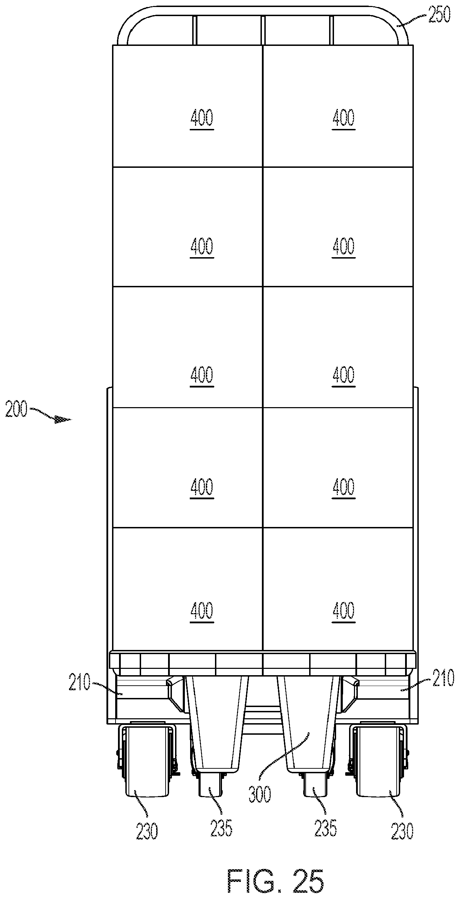

Figures 20-23 illustrate the sled 200 with one fully loaded pallet 300 in an isometric view, top view, right side view, and two fork-protruding side view, respectively. Figures 20-23 illustrate the sled 200 with its forks 210 in an unraised position, such as how the sled 200 would position its forks underneath the pallet 300 before lifting the pallet 300. Figures 24 and 25, on the other hand, illustrate the sled 200 with its forks 210 in a raised position such that the pallet 300 is off the floor and ready to be transported by the sled 200. Figures 24 and 25 are right side and fork-protruding side view, respectively.

The range of vertical motion of the forks may be as little as a few *(e.g.,* six) inches to lift the pallet 300 and to provide ground clearance for the bottom of the pallet 300. Alternatively, the range of vertical motion of the forks may be considerably greater, such as, for example, up to 1 foot, 2 feet, or 3 feet, so as to facilitate more comfortable loading and unloading of the bottom, bottom two, or bottom three layers of the cases 400. Controls on the or near the handles 240 may be provided to activate the lifting mechanism, which may be pneumatic, hydraulic, electric, or other means. Controls may be provided to effectuate moving to a finite number of predetermined heights *(e.g.,* off ground for transport, to load/unload second layer from bottom, to load/unload bottom layer, etc.) or to an operator-chosen height. Without preset heights, like these, it can be difficult for an operator to manually control the height with the requisite precision. The controls may be dedicated buttons, press-and-hold operations, multi-clicks, etc. The forks 210 and the back frame 250 (and possibly other components) may raise and lower together.

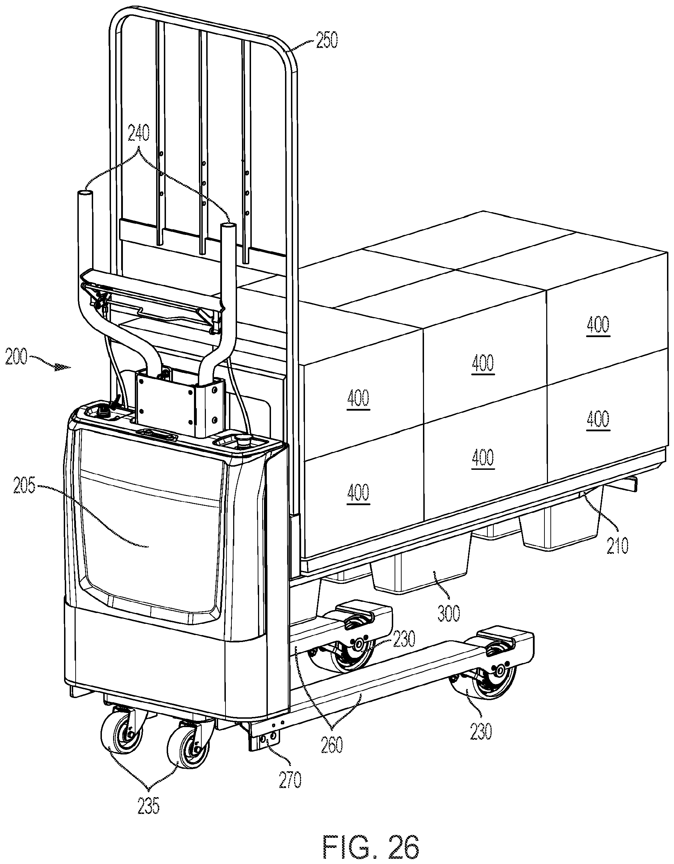

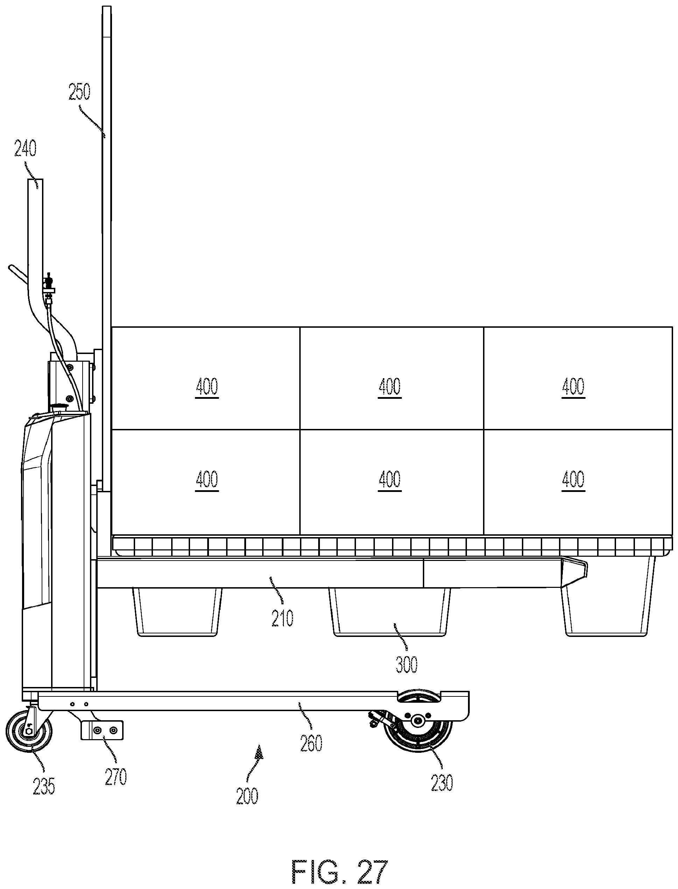

Figures 26 and 27 illustrate the sled 200 with a partial load in an elevated, ergonomic position to facilitate easier loading or unloading of cases 400 to/from the pallet 300. Figure 26 is an isomeric view, and Figure 27 is a right side view.

Figures 26 and 27 also illustrate a skid plate 270 under the proximate end of the right horizontal base leg 260. A similar skid plate, though not visible in Figures 26 and 27, may also be symmetrically located under the proximate end of the left base leg 260. The skid plate(s) 270 can assist in aligning the sled 200 and the pallet truck 100 when they nest together. The skid plate 270, as shown here, comprises a small rectangular metal plate oriented vertically and attached to the bottom of the horizontal base leg 260 via an arm. The skid plate 270, as shown here, also preferably comprises a skid pad mounted on the outside of the metal plate.

The skid pad may be made of any suitable material that can acceptably slide along the inside vertical sides of the forks 115 of the pallet truck 100 to help position the sled 200 laterally for nesting with the pallet truck 100. For example, the skid pad may be an ultra high molecular weight polyethylene (UHMWPE), which is a plastic with high durability and low friction. As another example, the skid pad may be a self-lubricating material (e.g., self-lubricating plastic) or have a low-friction coating, such as polytetrafluoroethylene (*e.g.*, Teflon^{®}).

The skid pad may be removable so that it can be replaced as needed. For example, the metal plate may have one or more threaded horizontal holes and the skid pad may have two corresponding recessed holes such that the skid pad can be removably bolted to the metal plate. Two such holes are illustrated in Figures 26 and 27.

The skid plate 270 shown in Figures 26 and 27 is positioned vertically to be at the same height as the right fork 115 (specifically the inner support section 120) of the pallet truck 100 and is positioned laterally/horizontally to be close to (perhaps even lightly contacting) the interior vertical wall of the right fork 115 (specifically the inner support section 120) when the sled 200 and the pallet truck 100 are in proper lateral alignment for nesting. A corresponding skid plate 270 of the left side of the sled 200, if present, would be similarly positioned vertically to at the same height as the left fork 115 (specifically the inner support section 120) and positioned laterally/horizontally to be close to (perhaps even lightly contacting) the interior vertical wall of the left fork 115 (specifically the inner support section 120) when the sled 200 and the pallet truck 100 are in proper lateral alignment for nesting.

The skid plate 270 may be longer or shorter than illustrated in Figures 26 and 27. For example, the skid plate 270 may approximately the entire length of the inner support section 120 or some fraction thereof. Although Figures 26 and 27 illustrate one skid plate 270 on a horizontal base leg 260, multiple skid plates may be placed along a horizontal base leg 260. For example, several skid plates like the skid plate 270 may be placed in alignment along the proximate portion of the horizontal base leg 260, and/or one or more skid plates may be placed wider apart along the distal end of the horizontal base leg 260 where the longer outer sections 125 of the forks 115 of the pallet truck 100 are located.

Alternatively or additionally, skid plates may be mounted along the inside walls of the forks 115 of the pallet truck 100. For example, skid plates may be placed along the interior side walls of the tapers 122 and/or the distal sections 125. Such skid plates could be, for example, strips of durable low-friction material attached to the interior side walls by fasteners *(e.g.,* screws, bolts, rivets), adhesive, or other suitable means. Having skid plates on the tapers 122 and/or the distal sections 125 of the forks 115 of the pallet truck 115 may be preferable over skid plates on the sled 200 positioned outside of the horizontal base leg 260, in order to minimize the width of the sled 200.

The skid plates described herein are examples of alignment features. Alternatively, other alignment features can be used in place of the skid plates. Other alignment features include, for example, roller wheels that rotating horizontally about a vertical pin acting as an axis of rotation. For example, the skid plate 270 illustrated in Figures 26 and 27 could be replaced by a roller wheel. Another example of an alignment feature is ball bearings embedded in partially open cavities along a surface, such as the inner side walls of the forks 115 of the pallet truck 100, or in place of the skid pad described above. Furthermore, tapered or slanted features or surfaces, such as the tapers 122, are other examples of alignment features. Another example of an alignment feature is magnets that are positioned on the pallet truck 100 and/or the sled 200 (in particular the forks 115 and the horizontal base legs 260) to guide them and/or keep them in a proper relative position for nesting. Any feature on either the sled 200 or the pallet truck 100 or both that aids in aligning the pallet truck 100 and the sled 200 in position vis-a-vis each other for nesting is an alignment feature.

### Pallet Design

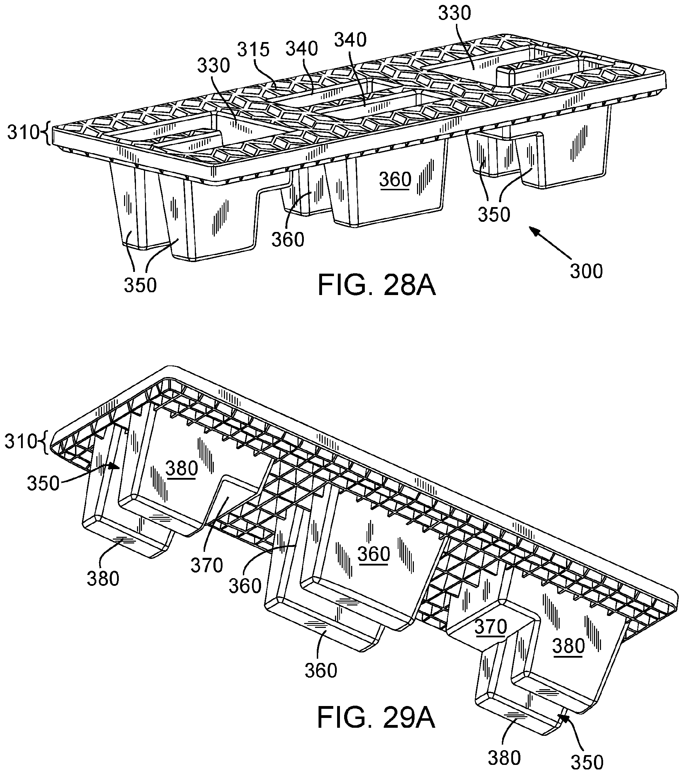

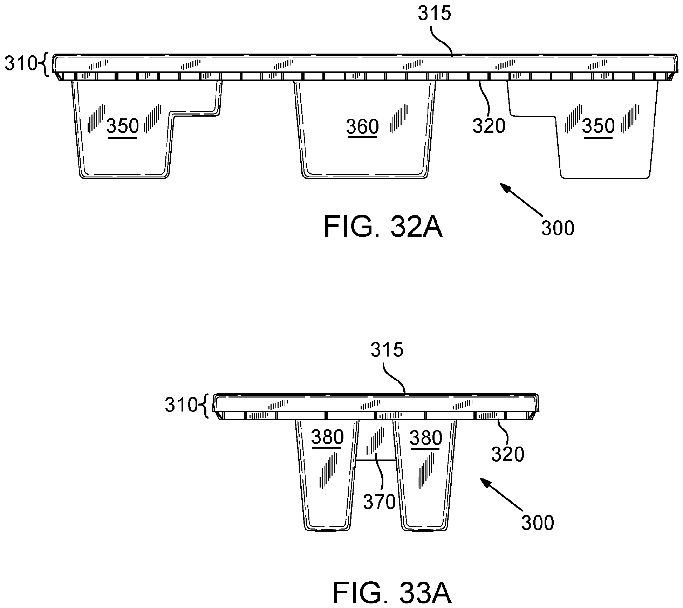

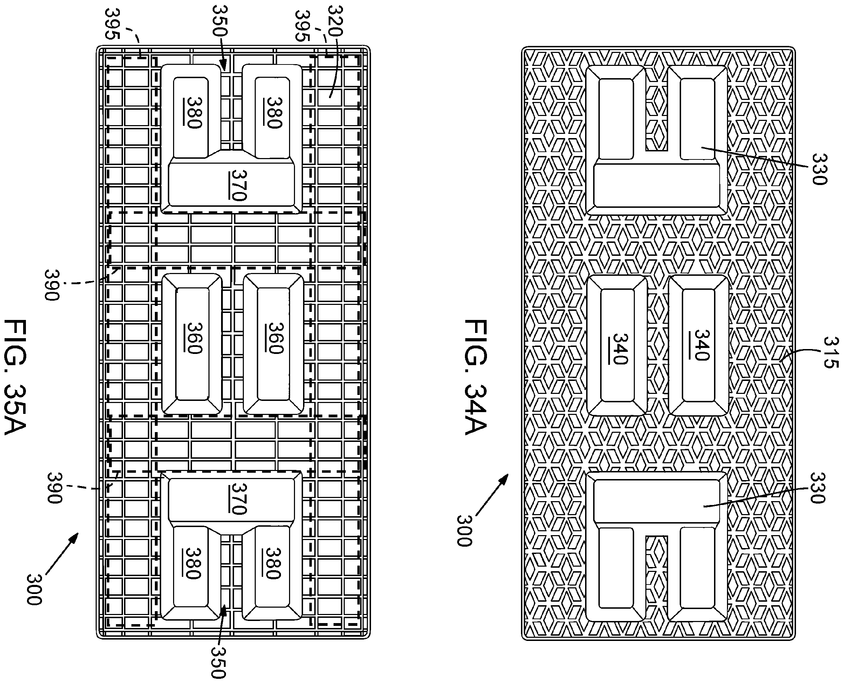

Figures 28A-35A are various views of the pallet 300, according to one embodiment. Figures 28A-31A are isometric diagrams from various top corner and bottom corner perspectives. Figures 32A and 33A are side views from the long and short sides, respectively. Figure 34A is a top view, and Figure 35A is a bottom view. Figures 28B-35B are like Figures 28A-35A but without any texture features on the pallet 300 and illustrating some features in dashed lines to emphasize their optional nature. The pallet 300 is designed for dual use with both the pallet truck 100 (or a similar pallet truck) and the sled 200 (or a similar sled). The pallet 300 is also designed to be lifted in either the broadside or the inline orientation with respect to the lifting vehicle or its forks. Features that help accomplish these design objectives will be described next.

The pallet 300 according to this illustrated embodiment has a deck 310 having a top surface 315 and a bottom side 320. The deck 310 is a table-top-like platform but having openings or holes where supporting feet are located. The top surface 315 has four holes - two U-shaped end holes 330 and two generally rectangular inner holes 340. Beneath the U-shaped end holes 330 are U-shaped feet 350, and beneath the inner holes 340 are generally rectangular feet 360.

The feet 350 are bi-level U-shaped feet. Along the base of the U is an intermediate foot 370 at a first vertical level. Along each side of the U is a full foot section 380 at a second vertical level, which may be full bottom level or ground level. The intermediate foot 370 may be at a depth that is, for example, 20%-50% of the full-depth of the second level. The intermediate feet 370 are positioned to match the forks 115 of the pallet truck 100 such that the pallet truck 100 can lift the pallet 300 in the broadside orientation by applying the forks 115 to the bottom sides of the intermediate feet 370. For example, the center-to-center distance between the intermediate feet 370 equals or approximates the center-to-center distance between the forks 115 of the pallet truck 100.

As illustrated in Figures 35A and 35B, there are fork lift areas 390 and 395 on the bottom side 320 of the deck 310. These are areas where forks can fit and lift the pallet 300. The fork lift areas 390 between the inner feet 360 and the U-shaped feet 350 are shaped and located to match the forks 210 of the sled 200 such that the sled 200 can lift the pallet 300 in the broadside orientation by applying the forks 210 to the areas 390 on the bottom side 320 of the pallet 300. For example, the center-to-center distance between the areas 390 equals or approximates the center-to-center distance between the forks 210 of the sled 200. That is, the dimension of the inner feet 360 in the long direction of the pallet 300 is less than the gap between the forks 210 on the sled 200, and the distance between the intermediate feet 370 of the U-shaped feet 350 is less than the exterior side-to-side extent of the forks 210. And, thus, the space between the center feet 360 and the interior portion of the U-shaped feet 350 is sufficient to fit the forks 210.

Moreover, as shown in Figure 35A and 35B, fork lift areas 395 are shaped and located to match the forks 210 of the sled 200 such that the sled 200 can lift the pallet 300 in the inline orientation by applying the forks 210 to the areas 395 on the bottom side 320 of the pallet 300, as shown, for example, in Figures 10 and 21-27.

Additionally, the bottoms of the intermediate feet 370 are also fork lift areas shaped and located to match the forks 115 of the pallet truck 100 lifting the pallet 300 in the broadside orientation.

The size of the pallet 300 may be, for example, from about 44 inches to about 49 inches in the long direction, from about 18 inches to about 22 inches wide in the short direction, and from about 7 inches to about 11 inches tall in height. The feet 350 and 360 may be, for example, from about 6 inches to about 8 inches tall in total height, and the intermediate feet may be, for example, from about 3.5 inches to about 5.5 inches above the ground. The deck 310 may be, for example, from about 2.5 inches to about 3.5 inches thick. The inner feet 360 may have dimensions of, for example, from about 4 inches to about 6 inches by from about 7 inches to about 11 inches. The intermediate feet 370 may have dimensions of, for example, from about 2.5 inches to about 5 inches by from about 7 inches to about 11 inches. The full feet sections 380 may have dimensions of, for example, from about 4 to about 6 inches by from about 3.5 to about 5.5 inches. Different versions of the pallet 300 may be employed. For example, a version for beverages and a version for food may differ in their dimensions for various reasons, such as to better match load sizes and/or to better fit in trucks beds meant to carry beverages or food, respectively.

The bottom side of the deck 310 may have an open structure with ribs running in one or both transverse directions to provide structural strength. For example, longitudinal ribs (in the direction of the longitudinal axis 305) and latitudinal ribs (perpendicular to the longitudinal axis 305) may form a square honeycomb structure, as shown in Figures 29, 31, and 35. The spacing between the ribs need not be uniform, as shown, and need not be the same in the longitudinal and latitudinal directions. Alternatively, another honeycomb structure, such as rectangular, hexagonal, or triangular honeycombs may be employed instead. Alternatively, any other suitable structure may be used, if and as necessary, to enhance the strength and rigidity of the pallet 300 to hold and carry its expected load. Alternatively, the bottom side of the deck 310 may have a closed flat surface, and there may be honeycombs or other structural-strength-enhancing ribs inside between the top surface 315 and a closed flat bottom side surface. Alternatively, the deck 310 may be solid or hollow.

One or more holes may be provided in the bottom of the feet 350, 360, 370, and/or 380 for drainage of water, spilled beverages, or the like that would otherwise collect in the feet cavities.

The feet 350, 360, and 370 may have sloped sidewalls to facilitate stacking of the pallets 300 atop one another so as to conserve floor space when the pallets are not in use. For example, the inner feet 360 may have an inverted truncated pyramid shape as shown, a trapezoidal prism shape, or any other suitable stackable shape. The same is generally true for the U-shaped feet and their components (full feet 380 and intermediate feet 370).

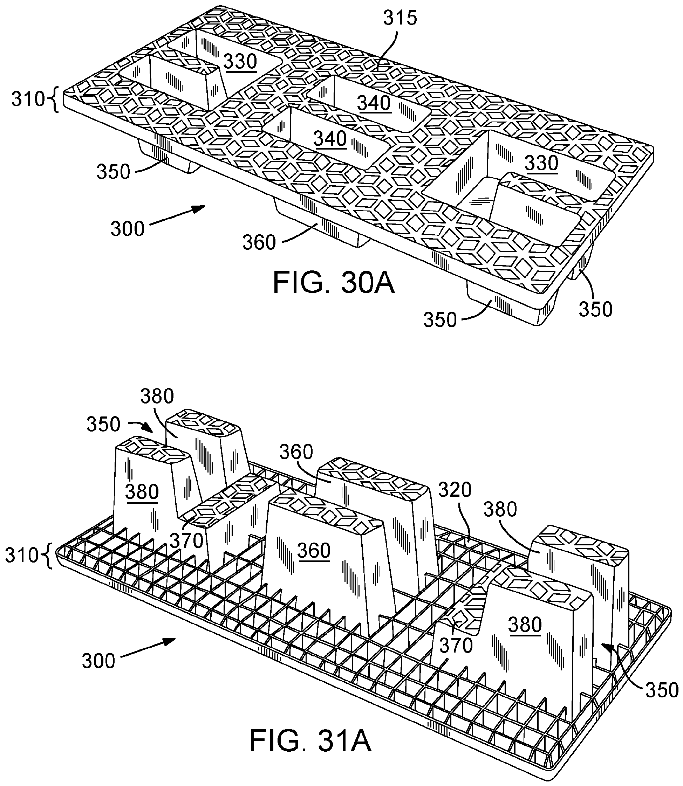

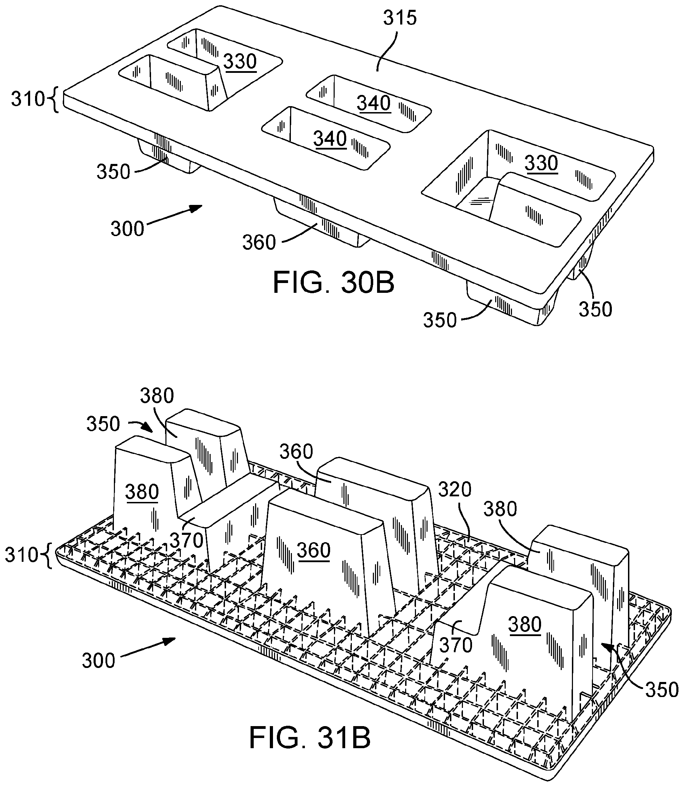

The top surface 315 may optionally be textured, as shown in Figures 28A-35A, or not, as shown in Figures 28B-35B. Texturing of the top surface 315 may reduce the possibility that a case 400 slips off the top surface 315. Likewise, the bottoms of one or more of the feet 350, 360, 370, and/or 380 may also optionally be textured, as shown in Figure 31A, or not. Texturing the bottom surfaces of the feet 360 and 380 may reduce the possibility that the pallet 300 unintentionally slides on the floor. Texturing the bottom surfaces of the intermediate feet 370 may reduce the possibility that the pallet 300 slips on the forks 115.

The feet 350, 360, 370, and/or 380 may optionally have rounded corners, as shown in Figures 28A-35B.

The pallet 300 may be made of any suitable materials, such as, for example, a plastic *(e.g.,* high density polyethylene (HDPE)). The pallet 300 may be manufactured, for example, by injection molding or other known techniques. The pallet 300 may be colored and have a distinctive color. The pallet 300 may bear a company name and/or logo and/or textual information, such as by molding, printing, application of a sticker, or other means.

The pallet 300 may also have an optional notch along the perimeter of the deck 310 for use when wrapping and/or unwrapping the load with plastic wrap *(e.g.,* cellophane).

### Nesting and Locking

Figures 36A-36D illustrate a sequence by which a pallet truck 100 and a sled 200 come into a nested relationship. Figures 36A-36D are views from the bottom of the pallet truck 100 and the sled 200. In Figure 36A, the proximate (operator) end of the sled 200 is just beginning to enter the space between the forks 115 of the pallet truck 100, in particular, the space between the thinner outer sections 125 of the forks 115. In Figure 36B, the proximate (operator) end of the sled 200 has passed between the thinner outer sections 125 of the forks 115. In Figure 36C, the sled 200 has reached a point where (1) the skid plates 170 on the pallet truck 100 skid or slide against or near the load wheels 230 on the sled 200 and (2) the skid plates 270 on the sled 200 skid or slide against the interior portions of the wide inner support sections 120 of the forks 115 of the pallet truck 100. The skid plates 170 and 270 thus help align the sled 200 with the pallet truck 100 for nesting. Together, the skid plates 170 and 270 prevent angular misalignment of the pallet truck 100 and the sled 200 better than just one set of skid plates alone could. In Figure 36D, the sled 200 has reached a position to fully nest with the pallet truck 100.

Figures 37A-40B illustrate the pallet truck 100 and the sled 200 nested together in various stages of lifting two pallets 300. Figure 37A is a right side view and Figure 37B is a front side view of a nested pallet truck 100 and sled 200 combination placed under two pallets 300, which are resting on the floor/ground. As shown in Figures 37A and 37B, the pallet truck 100 and the sled 200 are not locked to each other, as the arm 510 of a locking mechanism 500 has its finger 540 (not labeled in Figure 37A but on the left end of the arm 510) in a raised position. More information about the locking mechanism 500 is provided below with reference to Figures 41-46. As a result, all wheels of the pallet truck 100 and the sled 200 are on the floor and the forks 115 of the pallet truck 100 and the forks 210 of the sled 200 are able to move underneath the pallets 300 without contacting the pallets 300. Figures 37A-37B illustrate the pallet truck 100 at its base (lowest), unlocked height. There may be a button or other control on the tiller 140 to cause the pallet truck 100 to move to this base, unlocked height. The sequence of Figures 36A-36D occurs at this base, unlocked height.

Figure 38A is a right side view and Figure 38B is a front side view of a nested and locked pallet truck 100 and sled 200 combination placed under two pallets 300, which are still resting on the floor/ground. Unlike Figures 37A and 37B, Figures 38A and 38B illustrate the pallet truck 100 in a higher position such that the pallet truck 100 and the sled 200 are locked together. The fact that the forks 115 of the pallet truck 100 are higher in Figures 38A and 38B than shown in Figures 37A and 37B can be appreciated from the fact that the most distal wheel 130 under the fork 115 has lowered relative to the fork 115. Lowering the load wheels 130 is, in fact, what typically causes the forks 115 to raise. The locking is evident from the fact that the arm 510 of the locking mechanism 500 has its finger 540 (not labeled in Figure 38A but on the left end of the arm 510) in a lowered position so that it is engaged in the hole 150 in the fork 115 of the pallet truck 100. Yet, the pallet truck 100 has not yet raised the sled 200 in Figures 38A and 38B, and all wheels of the pallet truck 100 and the sled 200 remain on the floor and the forks 115 of the pallet truck 100 and the forks 210 of the sled 200 are still able to move underneath the pallets 300 without contacting the pallets 300. Figures 38A-38B illustrate the pallet truck 100 at its sled-locking height. There may be a button or other control on the tiller 140 to cause the forks 115 of the pallet truck 100 to go to this locking height and/or a slightly higher height at which the pallet truck lifts the sled but low enough to move the forks under a pallet.

Figure 39A is a right side view and Figure 39B is a front side view of a nested and locked pallet truck 100 and sled 200 combination on the brink of lifting two pallets 300 off the floor/ground. Figures 39A and 39B illustrate the pallet truck 100 in a higher position than Figures 38A and 38B. Figures 39A and 39B show that the pallet truck 100 has lifted the sled 200 off the floor. The fact that the forks 115 of the pallet truck 100 are higher in Figures 39A and 39B than shown in Figures 38A and 38B can be appreciated from the fact that the most distal load wheel 130 under the fork 115 has lowered even further relative to the fork 115. Yet, the pallet truck 100 has not yet lifted the pallets 300 in Figures 39A and 39B. Figures 39A-39B illustrate the pallet truck 100 at a pallet-engagement height, at which the top surface of the forks 115 of the pallet truck 100 begin to touch the bottom surfaces of the intermediate feet 370 on the bottom sides of the pallets 300. At this pallet-engagement height, the top surface of the forks 210 of the sled 200 have not yet reached the bottom sides 320 of the pallet 300, as the pallet truck 100, rather than the sled 200, preferably lifts the pallets when the pallet truck 100 and the sled 200 are nested together. There may be a button or other control on the tiller 140 to cause the forks 115 of the pallet truck 100 to go to this pallet-engagement height and/or a slightly lower height at which the forks may move under a pallet without touching the pallet.

Advantageously, there is a button or other control on the tiller 140 to cause the pallet truck 100 to place the forks at an intermediate height between what is shown in Figures 38 and 39. At such a height, the pallet truck 100 has lifted the sled 200, and they are locked together but the forks are low enough to fit under the pallet 300. This height is useful before lifting the pallet 300 (to move the forks into position to lift the pallet 300) and after setting down the pallet 300 (to remove the forks from under the pallet 300). This height, at which the sled is nested, locked, and lifted off the floor but the forks are still low enough to fit under a pallet, can be difficult for an operator to achieve by manually adjusting the fork height over a continuum of possible height. A preset setting for this height, which the operator can achieve by a press of a button or the like, can enhance operator efficiency.

Figure 40A is a right side view and Figure 40B is a front side view of a nested and locked pallet truck 100 and sled 200 combination lifting two pallets 300 off the floor/ground. Figures 40A and 40B illustrate the pallet truck 100 in a higher position than Figures 39A and 39B (and thus Figures 37A-38B). Figures 40A and 40B show that the pallet truck 100 has lifted both the sled 200 and the pallets 300 off the floor by an amount that is typically sufficient to move the pallets 300 (and the loads on them). As can be seen, the most distal load wheels 130 under the forks 115 have lowered even further relative to the forks 115, causing the forks 115 to rise. There may be a button or other control on the tiller 140 to cause the forks of the pallet truck 100 to go to this move-ready height.

Figures 41 and 42 are side views of a pallet truck 100 and a sled 200 in a nested configuration with a cut-away window view of one example of a locking mechanism 500 unengaged (Figure 41) and engaged (Figure 42). The locking mechanism 500 according to this example is a pivoting arm with a catch hook or finger on one end that enters a hole when in the locked position. As can be seen, the forks 115 of the pallet truck 100 are in a lowered position in Figure 41 so as not to cause the locking mechanism 500 to engage in the locked position, whereas the forks 115 are in a raised position in Figure 42 sufficiently high to cause the locking mechanism 500 to engage in the locked position. This is just one example of a mechanism for locking the pallet truck 100 and the sled 200 together. A variety of other mechanisms may accomplish that same objective.

Figures 43-46 further illustrate the locking mechanism 500. Figure 43 is an isometric diagram of the sled 200 in a partially disassembled state from a bottom perspective. The wheels 230 and 235 (and other components) have been removed from the sled 200 as shown in Figure 36 to better reveal the locking mechanisms 500. As illustrated in Figure 43, there is one locking mechanism 500 near the proximate end of each horizontal base leg 260, but the locking mechanism 500 could be located anywhere along the length of the horizontal base leg 260, such as, for example, at or near the center of the horizontal base leg 260. The load wheels 230 (not shown in Figure 36) would mount near the opposite, distal end of the horizontal base legs 260. Each locking mechanism 500 has a pivoting arm 510 that pivots vertically about a pivot point 520 in the interior portion of the arm 510. The pivot point 520 may be at or near the middle of the arm 510, or more toward one end or the other. At or near one end of the of the arm 510, on its bottom side, is an activation area 530. At or near the other end of the arm 510 is a downward extending finger 540. As illustrated here, the pivot point 520 is closer to the activation area and further from the finger 540 so that a small movement of the activation area 530 causes a larger movement of the finger 540. As illustrated here, the pivot point 520 is about 75% of the length of the arm 510 from the finger 540 and 25% away from the activation area 530. The activation area 530, as shown here, is located on the distal end of the arm 510 (*i.e.*, closer to the load wheel 230), and the finger 540 is located on the proximal end of the arm 510, but the opposite arrangement is also possible. An upward force applied to the activation area 530 causes the arm 510 to pivot vertically about the pivot point 520 such that the activation area 530 is pressed upward and the finger 540 moves downward. As explained with reference to the following drawings, downward movement of the finger 540 causes it to enter into a corresponding locking hole 150 on the pallet truck 100 to lock the sled 200 in place on the pallet truck 100.

A locked arrangement, as used herein, means that the pallet truck 100 and the sled 200 cannot appreciably move relative to one another. Some small amount of relative movement may result from mechanical tolerances and the like. For example, the size of the finger 540 and the locking hole 150 may permit some small relative movement of those two items and thus the two vehicles. Small relative movements are acceptable so long as the movement does not prevent the pallet truck 100 and the sled 200 from being moved in tandem with a full load. Too much play between the pallet truck 100 and the sled 200 can be problematic, for example, for the stability of a load.

Figure 44 is an isometric cut-away partial view inside the right horizontal base leg 260. Figure 44 also shows part of the pallet truck 100, including the locking hole 150 on the top surface of the fork 115. Figure 44 shows the locking mechanism 500 in an unlocked position, with the finger 540 raised above the locking hole 150 and the activation area 530 extended downward.

Figures 45 and 46 are zoomed-in isometric cut-away partial views inside the right horizontal base leg 260 and through the arm 530. Figure 45 shows the locking mechanism 500 on the verge of entering a locked position, with top surface of the fork 115 pushing the activation area 530 upward, and the finger 540 about to enter the locking hole 150. Figure 46 shows the locking mechanism 500 in a locked position, with top surface of the fork 115 pushing the activation area 530 upward, and the finger 540 partially in the locking hole 150.

Locking mechanisms other than a pivoting arm are possible. For example, the forks 115 of the pallet truck 100 may have one or more pivoting jaws that clamp around the sides of the forks 210 or horizontal base legs 260 or other component of the sled 200 when the forks 115 are raised to contact the corresponding portion of the sled 200. As another example, magnets (*e.g.*, electromagnets) may be placed in the forks 115 of the sled 100 and also in the forks 210 or horizontal base legs 260 or other component of the sled 200 such that magnet attraction locks the sled 200 and pallet truck 100 together. Mechanical switches activated by pressure when the pallet truck 100 initially contacts and lifts the sled 200 can turn on the magnets to activate the magnetic locking. Other examples are also possible.

The sled 200 may be automatically powered on when it is unlocked and/or unnested from the pallet truck 100. Also, the sled 200 may be automatically turned off when it is locked and/or nested in the pallet truck 100. Automatic turn-on can save time for the operator, and automatic turn-off can save battery charge on the sled 200. A magnetic proximity sensor can be used, for example, to detect when the sled 200 is in the nested position and used to open or close a power circuit for the sled 200. Alternatively, movement of the finger 540 can physically reposition an electric switch or magnetic sensor or other type of sensor to turn on or off the power to the sled 200. The sled 200 may have one or more indicator lights *(e.g.,* light emitting diodes (LEDs)) to indicate whether the power is on or off or other mode of the sled 200.

### Use Cases

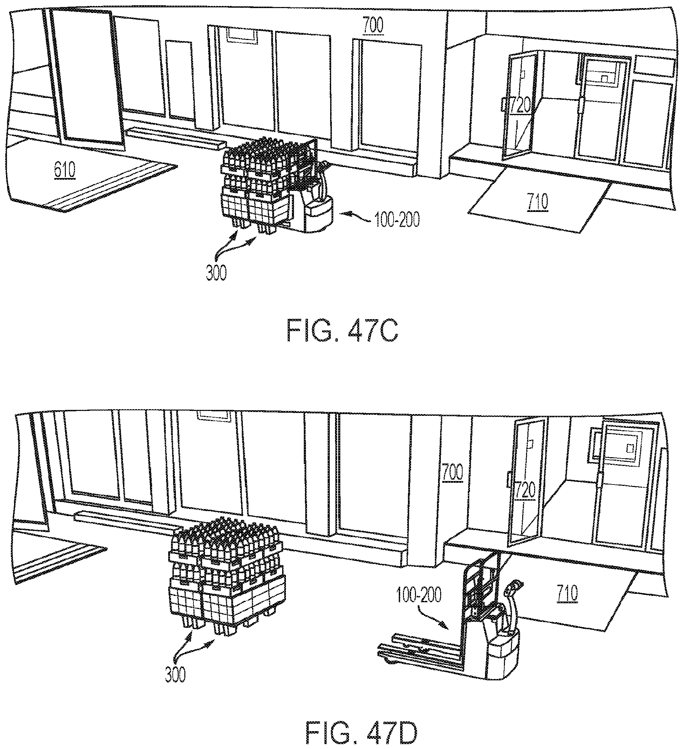

Figures 47A-47J illustrate a sequence for transporting items (in this case, beverages) from a truck/trailer bed 600 to the interior of a store 700. First, as shown in Figures 47A-47B, the truck/trailer bed 600 is parked near the store 700, such as in a parking lot. Next, a nested and locked combination of a pallet truck 100 and sled 200 is used in the truck/trailer bed 600 to take two fully loaded pallets 300 out of the truck/trailer bed 600. In this case, the truck/trailer is equipped with a lift gate 610, by which the loaded pallet-truck-sled combination 100-200 and its loaded pallets 300 can be lowered to the ground outside the truck/trailer. At this point, the loaded pallet-truck-sled combination 100-200 and its loaded pallets 300 are in the parking lot outside the store, as shown in Figure 47C.

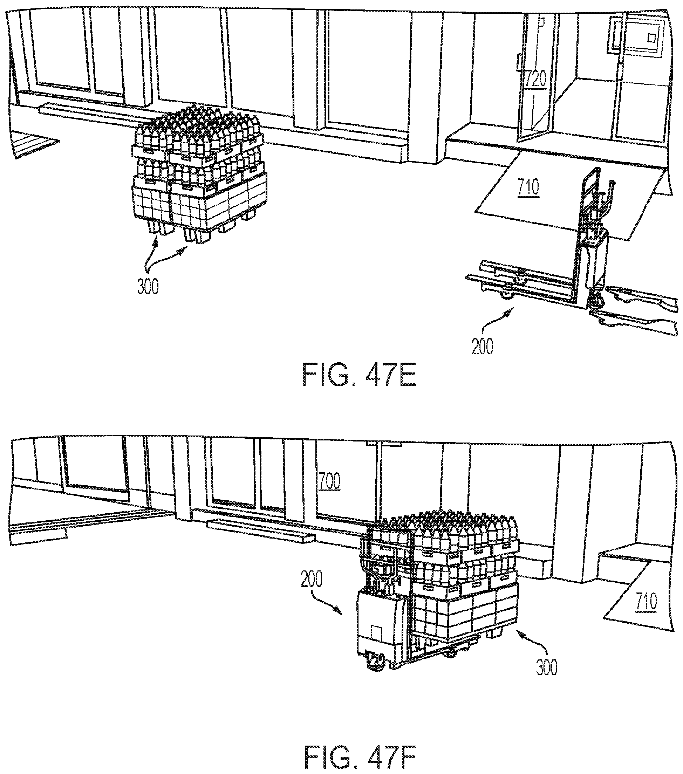

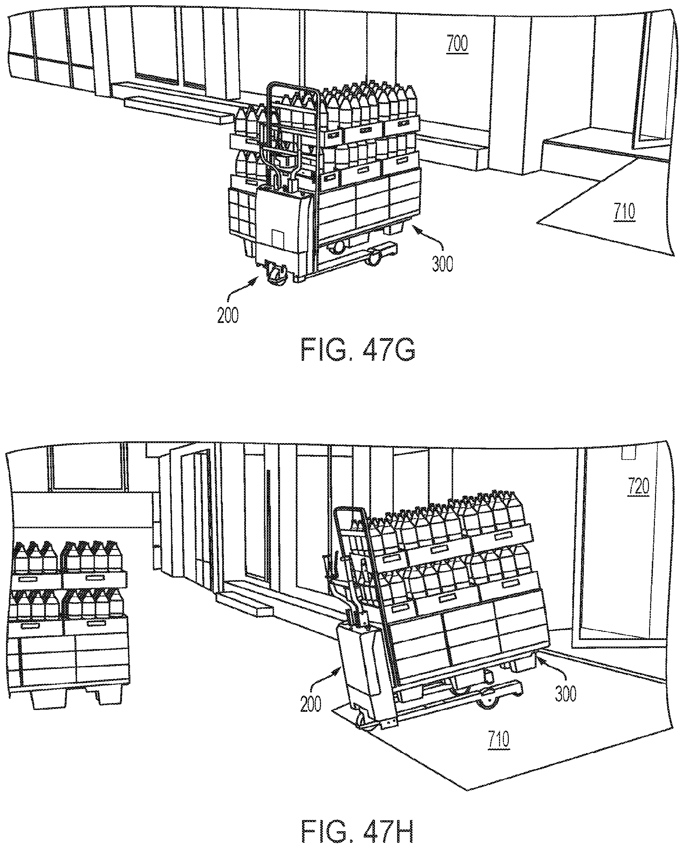

After the loaded pallet-truck-sled combination 100-200 is maneuvered to a staging location, preferably near an entrance to a store, loaded pallets 300 are set on the ground and the pallet-truck-sled combination 100-200 is disengaged and backed away from the loaded pallets 300, as shown in Figure 47D. The sled 200 is then unlocked and unnested from the pallet truck 100, as shown in Figure 47E. The unlocking may occur automatically as the forks 115 of the pallet truck 100 are fully lowered, thereby disengaging the locking mechanism 500. Once unlocked, the pallet truck 100 can be moved laterally by itself away from the sled 200. The sled 200 can then be used to take the loaded pallets 300 into the store 700 one at a time. As shown in Figure 47F, the sled 200 is guided under one of the pallets 300. And, as shown in Figure 47G, the sled 200 lifts that pallet 300.

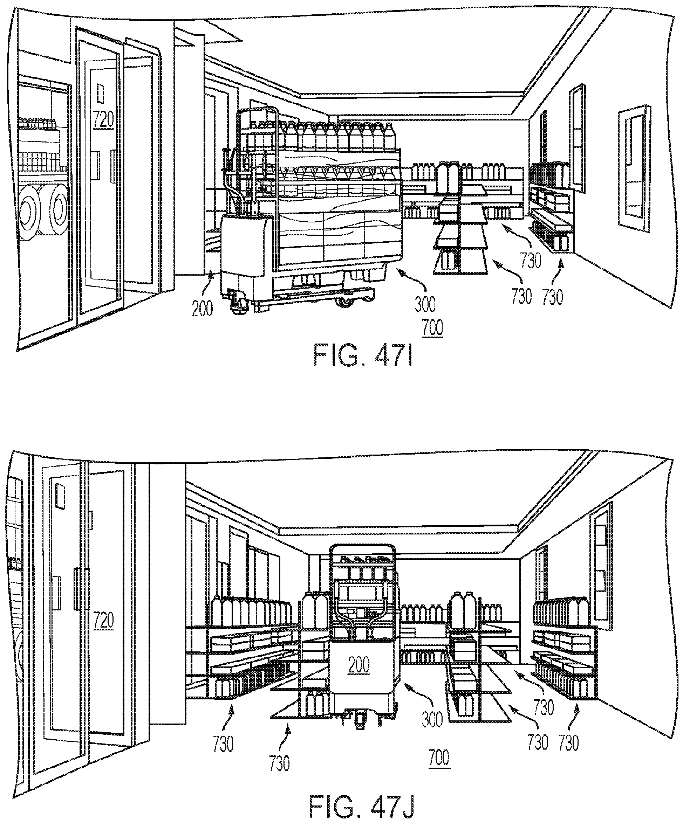

Next, the sled 200 is driven up a ramp 710 into the store 700, as shown in Figure 47H. The load wheels 230 being motorized hub wheels can aid in moving the sled 200 and its load up the ramp 710. The sled 200 fits through a single door 720 of the store 700. In the store 700, the sled 200 can be easily turned 360 degrees, as illustrated in Figure 47I, as the caster wheel (a single wheel in this embodiment), can rotate in its heading direction, and the load wheels 230 are located approximately near the center of the load (from front to back). The sled 200 can then be maneuvered within proximity of store shelves 730 (or other destinations) where the load is to be unloaded, as illustrated by way of example in Figure 47J. As lower layers of the load are accessed, the sled 200 can lift its forks 210 mechanically (without human assistance) to ease unloading with a minimum of bending by the operator.

The empty sled 200 (or carrying unloaded pallets 300) can then be rolled out of the store 700, and the process illustrated in Figures 47A-47J can be repeated to take the other loaded pallet 300 (left on the ground after the actions illustrated in Figures 47G-47H) into the store for unloading on the shelves 730 or other appropriate target *(e.g.,* cooler or stock room).

Note that the height of the forks 115 of the pallet truck 100 in Figures 47A-47J may be as follows:

| Drawing | Height |
|---|---|
| Fig. 47A | Nested, locked, and ready to move under a pallet |
| Fig. 47B | Lifting/carrying |
| Fig. 47C | Either/both of above |
| Fig. 47D | Nested, locked, and ready to move under a pallet |
| Fig. 47E | Minimum (unlocked and unnested) |
| Figs. 47F-47J | N/A |

Figures 47E-47J show the sled 200 with a single caster wheel 235 (not labeled in Figure 47) laterally centered on the rear side of the sled 200. Other drawings depict two caster wheels 235 symmetrically offset from the lateral center. The choice of using one or two (or more) caster wheels 235 on the sled 200 is a design choice.

Figure 48 is a flowchart of a method 800 of using the pallet truck 100, the sled 200, and pallets 300 to deliver items into a building, according to one embodiment. The items are packaged in cases, and, at step 805, the cases are loaded onto pallets. The loaded pallets may optionally be wrapped in plastic sheets. Step 805 may take place, for example, at a warehouse, distribution center, or the like. At step 810, the loaded pallets are transported into a truck/trailer bed/lorry using the pallet-truck ("PT" in Figure 52) - sled nested combination 100-200. Alternatively, any conventional pallet truck or pallet jack *(e.g.,* end-rider) may be used to perform step 810. For the sake of efficiency, the loaded pallets may be transported into the truck/trailer bed/lorry two or more at a time in the broadside orientation. After all loaded pallets are placed in the truck/trailer bed/lorry, the pallet-truck-sled nested combination 100-200 may also be placed in the truck/trailer bed/lorry.

At step 815, the truck/trailer is driven to a destination building and, at step 820, parked near the building, which may be, for example, a store, such as a convenience store. At step 825, two pallets are removed from the truck/trailer using the pallet-truck-sled nested combination 100-200. Step 825 is preferably performed with the pallets in the broadside orientation. A lift gate is preferably utilized during step 825. An example of step 825 is illustrated in Figures 47A-47C. A typical lift gate can accommodate about four pallets (and the pallet-truck-sled combination) together. Thus, an operator may first move two pallets onto the lift gate, then move two more pallets onto the lift gate, and then lower the lift gate with the pallet-truck-sled combination still underneath the last pair of pallets, if four or more pallets need to be delivered into the store.

At step 830, the pair of loaded pallets are set down on the ground near the building, preferably near the entrance to the building (*e.g.*, on a sidewalk or in a parking log) but in a place that will not disrupt regular activities in and around the building and its entrance. At step 835, the pallet-truck-sled nested combination 100-200 is moved away from the pallets. An example of steps 825 and 830 is illustrated in Figure 47C-47D.

At step 840, the sled 200 is unnested from the pallet truck 100. If the pallet truck 100 and the sled 200 are locked together, as is typically the case, then step 840 involves unlocking the sled 200 from the pallet truck 100. The exact unlocking action depends on the design of the locking mechanism. Using the locking mechanism 500 illustrated in Figures 36-41, for example, step 840 involves disengaging the finger 540 from the hole 150 by lowering the forks of the pallet truck 100. After unlocking, the pallet truck 100 is moved out from under the sled 200. An example of step 840 is illustrated in Figure 47E. Next, at step 845, the sled 200 is maneuvered to pick up one of the loaded pallets in the inline orientation. An example of step 845 is illustrated in Figures 47F-47G.

At step 850, the sled 200 is used to transport the pallet into the building and then to the target destinations within the building where the cases and the items therein are to be delivered, per step 855. Step 850 may be aided by use of powered hub motors in the load wheels 230 of the sled 200. Because of the narrow size of the sled 200, step 850 can be performed through single doors and narrow halls or aisles. Because of the high degree of maneuverability of the sled 200, step 850 may be accomplished with greater ease, especially through tight spaces, as commonly occur inside buildings. To ease the physical strain and burden on the operator performing step 855, the sled 200 can mechanically raise its forks (and thus the cases thereon) to facilitate easier unloading of the cases thereon without or with less vertical bending (*e.g.,* in the back) by the operator. An example of step 850 is illustrated in Figures 47H-47J.

After completion of step 855, one pallet has been delivered within the building. Next, at step 860, the sled 200 (now empty except for possibly an empty or partially empty pallet) is taken outside the building to the place where the other pallet unloaded from the truck/trailer bed/lorry was left, and steps 845-855 can be repeated to deliver the goods on the second pallet within the building. If additional goods are to be delivered in the building, then steps 825-855 can be repeated as necessary to take loaded pallets from the truck/trailer bed/lorry and then into the building one at a time until all goods have been delivered. If only one pallet needs to be taken into the building, then steps 825-855 can be performed with just a single pallet. Alternatively, just the sled 200 can be used to take a single pallet all the way from inside the truck/trailer bed/lorry into the building. Empty pallets, which can be stacked to save space, can be returned to the warehouse, distribution center, or other origin (the same or different from the place where steps 805-810 were performed). And the pallet truck 100 and the sled 200 can be stored in the warehouse or the like together in the space of one pallet truck and recharged together by plugging into a single electrical outlet. In other words, the sled 200 does not impose any additional space or electrical requirements on the warehouse as compared to a single pallet truck.

Figures 49 and 50 illustrate another use-case for the pallet truck 100. Without the sled 200, the pallet truck 100 can be used to lift and transport any conventional pallet compatible with the forks of the pallet truck 100. For example, Figures 49 and 50 illustrate a conventional pallet 302, which may be, for example, nominally 48 inches by 40 inches, the GMA (Grocery Manufacturers Association) standard size in North America, or any other suitable size and shape. The conventional pallet 302 is often made of wood, but it is also possible that some or all of the conventional pallet 302 may be other material(s) (*e.g.*, plastic).

Figure 50 is similar to Figure 49 but additionally shows (1) an upper back frame 160 and (2) optional slots 180 where charging cables, for example, can be stored. The upper back frame 160 is mounted on top of the body 110 of the pallet truck 100 and can be used to help stabilize a load on the pallet 302, as shown in Figure 50, the pallet 300, or any other load, especially a tall load. Although Figure 50 illustrates the upper back frame 160 on a pallet truck 100 with a conventional pallet 302, the upper back frame may be equally useful with the pallets 300 described above. For example, straps can be placed around the load horizontally and secured to the upper back frame 160 to help stabilize the load. The upper back frame 160 may be permanently attached to the body 110 of the pallet truck 100 or may be removably attached so that it can be attached when needed and detached when not needed. The upper back frame 160 has an opening 165 at or near its center to facilitate access to the sled 200, such as its handles 240, during or after nesting the sled 200 with the pallet truck 100. The upper back frame 160 may have a different shape and/or form from what is illustrated in Figure 50, which shows merely an example of one design of the upper back frame 160.

### CONCLUSION

The terms and descriptions used above are set forth by way of illustration and example only and are not meant as limitations. Those skilled in the art will recognize that many variations, enhancements and modifications of the concepts described herein are possible without departing from the underlying principles of the invention. For example, skilled persons will appreciate that the subject matter of any sentence, paragraph, or drawing can be combined with subject matter of some or all of the other sentences, paragraphs, or drawings, except where such combinations are mutually exclusive. The scope of the invention should therefore be determined only by the following claims, claims presented in a continuing patent application or a post-issuance proceeding, and equivalents to such claims.

### REPRESENTATIVE FEATURES

1. A pallet truck and sled combination for delivering goods from a truck into a building, the combination comprising:
   a pallet truck, wherein the pallet truck is shaped and sized to nest with a sled by comprising an alignment feature configured to mate the sled with the pallet truck, wherein the pallet truck is shaped, sized, and constructed to lift the sled along with at least two palletized loads of goods, and wherein the pallet truck is shaped and sized to fit within a bed of the truck; and
   a sled, wherein the sled comprises an alignment feature compatible with the alignment feature of the pallet truck, and a lifting mechanism shaped, sized, and constructed to lift at least one of the palletized loads of goods.
2. A pallet truck and sled combination according to clause 1, wherein the pallet truck further comprises a first portion of a lock mechanism and the sled comprises a second portion of the lock mechanism;
   wherein the lock mechanism is shaped and sized to automatically lock the sled to the pallet truck in a nested position when the pallet truck lifts the sled; and
   wherein the lock mechanism is shaped and sized to automatically unlock the sled from the pallet truck when the pallet truck sets the sled down enabling the pallet truck to be moved to un-nest the sled from pallet truck.
3. A pallet truck and sled combination according to clause 2, wherein the lock mechanism comprises a pivoting arm on the sled and a hole on the pallet truck, wherein the pivoting arm comprises, on one end, a finger configured to enter the hole when the pallet truck and the sled enter the nested position.
4. A pallet truck and sled combination according to clause 1, wherein the pallet truck is electrically powered and wherein the sled is electrically powered, the combination further comprising:
   an inductive charging coil in the pallet truck, configured to provide charge; and
   an inductive charging coil in the sled positioned and configured to receive charge from the inductive charging coil in the pallet truck when the sled and the pallet truck are in a nested position.
5. A pallet truck and sled combination according to clause 1, wherein the sled comprises two forks.
6. A pallet truck and sled combination according to clause 5, wherein the forks of the sled are configured to raise and to lower vertically.
7. A pallet truck and sled combination according to clause 1, wherein the sled comprises two powered hub wheels.
8. A pallet truck and sled combination according to clause 1, wherein the sled comprises a vertical back frame.
9. A pallet truck and sled combination according to clause 1, wherein the sled comprises a caster wheel whose heading can rotate.
10. A method for making an in-building delivery of at least one palletized load from a truck, the method comprising:
   maneuvering a pallet truck with a nested sled locked to the pallet truck into a bed of the truck;
   picking up at least two palletized loads using the pallet truck with the nested sled and maneuvering the at least two palletized loads out of the bed of the truck to a position proximate a building entrance using the pallet truck with the nested sled;
   setting the at least two palletized loads down using the pallet truck with the nested sled;
   automatically unlocking the sled from the pallet truck;
   separating the nested sled from the pallet truck; and
   picking up at least one of the palletized loads using the sled and maneuvering the at least one of the palletized loads into the building using the sled.
11. A method according to clause 10, wherein the pallet truck comprises a first portion of a lock mechanism and the sled comprises a second portion of the lock mechanism; and wherein unlocking the sled from the pallet truck comprises removing the second portion of the locking mechanism from the first portion of the locking mechanism automatically when the pallet truck sets the sled down.
12. A method according to clause 10, wherein the building is a convenience store.
13. A method according to clause 10, wherein the at least one palletized load comprises beverages.
14. A method according to clause 10, further comprising:
   unloading at least part of a palletized load at one or more target destinations in the building.
15. A method according to clause 14, further comprising:
   mechanically raising at least part of a palletized load to facilitate said unloading.
16. A dual-use half-sized pallet comprising:
   a rectangular deck having a top surface configured to hold and support a plurality of cases, the rectangular deck having a long side and a short side; and
   a plurality of feet extending below the top surface,
   wherein the rectangular deck has a bottom side having a plurality of fork lift areas, wherein a first pair of fork lift areas is accessible by forks entering transverse to the long side, a second pair of fork lift areas is accessible by forks entering transverse to the long side, and a third pair of fork lift areas is accessible by forks entering transverse to the short side.
17. A dual-use half-sized pallet according to clause 16, wherein the rectangular deck has a thickness, and the first and third pairs of fork lift areas are approximately one thickness below the top surface, and the second pair of fork lift areas are below the top surface by an amount that is appreciably more than one thickness.
18. A dual-use half-sized pallet according to clause 16, wherein the first pair of fork lift areas are spaced apart laterally by a first distance, the third pair of fork lift areas are spaced apart laterally by the first distance, and the second pair of fork lift areas are spaced apart by a distance greater than the first distance.
19. A dual-use half-sized pallet according to clause 16, wherein the first and third pairs of fork lift areas are located to accommodate the pallet being carried by forks of a sled designed for in-building use, and wherein the third pair of fork lift areas are located to accommodate the pallet being carried by a pallet truck designed for warehouse, in-truck, and outside use.
20. A dual-use half-sized pallet according to clause 16, wherein the plurality of feet comprises a foot having a U-shape, the legs of the U extending down to ground level, and the base of the U extending partially down to an intermediate level above ground level.

## Claims

1. A pallet truck (100) and sled (200) combination for delivering goods from a truck into a building, the combination comprising:
a pallet truck (100), wherein the pallet truck (100) is shaped and sized to nest with a sled (200) by comprising an alignment feature (120, 122, 150, 170) configured to mate the sled (200) with the pallet truck (100), wherein the pallet truck (100) is shaped, sized, and constructed to lift the sled (200) along with at least two palletized loads of goods, and wherein the pallet truck (100) is shaped and sized to fit within a bed (600) of the truck; and
a sled (200), wherein the sled (200) comprises an alignment feature (260, 270, 500, 540) compatible with the alignment feature (120, 122, 150, 170) of the pallet truck (100), and a lifting mechanism shaped, sized, and constructed to lift at least one of the palletized loads of goods.

2. A pallet truck (100) and sled (200) combination according to claim 1, wherein the pallet truck (100) further comprises a first portion (150) of a lock mechanism (500) and the sled (200) comprises a second portion (510, 520, 530, 540) of the lock mechanism (500);
wherein the lock mechanism (500) is shaped and sized to automatically lock the sled (200) to the pallet truck (100) in a nested position when the pallet truck (100) lifts the sled (200); and
wherein the lock mechanism (500) is shaped and sized to automatically unlock the sled (200) from the pallet truck (100) when the pallet truck (100) sets the sled (200) down enabling the pallet truck (100) to be moved to un-nest the sled (200) from pallet truck (100).

3. A pallet truck (100) and sled (200) combination according to claim 2, wherein the lock mechanism (500) comprises a pivoting arm (510) on the sled (200) and a hole (150) on the pallet truck (100), wherein the pivoting arm (510) comprises, on one end, a finger (540) configured to enter the hole (150) when the pallet truck (100) and the sled (200) enter the nested position (100-200).

4. A pallet truck (100) and sled (200) combination according to any one of claims 1 to 3, wherein the pallet truck (100) is electrically powered and wherein the sled (200) is electrically powered, the combination further comprising:
an inductive charging coil in the pallet truck (100), configured to provide charge; and
an inductive charging coil in the sled (200) positioned and configured to receive charge from the inductive charging coil in the pallet truck (100) when the sled (200) and the pallet truck (100) are in a nested position (100-200).

5. A pallet truck (100) and sled (200) combination according to any one of claims 1 to 4, wherein the sled (200) comprises two forks (210).

6. A pallet truck (100) and sled (200) combination according to claim 5, wherein the forks (210) of the sled (200) are configured to raise and to lower vertically.

7. A pallet truck (100) and sled (200) combination according to any one of claims 1 to 6, wherein the sled (200) comprises two powered hub wheels (230).

8. A pallet truck (100) and sled (200) combination according to any one of claims 1 to 7, wherein the sled (200) comprises a vertical back frame (250).

9. A pallet truck (100) and sled (200) combination according to any one of claims 1 to 8, wherein the sled (200) comprises a caster wheel (235) whose heading can rotate.

10. A method for making an in-building delivery of at least one palletized load from a truck, the method comprising:
maneuvering a pallet truck (100) with a nested sled (200) locked to the pallet truck (100) into a bed (600) of the truck;
picking up at least two palletized loads using the pallet truck (100) with the nested sled (200) and maneuvering (825) the at least two palletized loads out of the bed (600) of the truck to a position proximate a building entrance using the pallet truck (100) with the nested sled (200);
setting the at least two palletized loads down (830) using the pallet truck (100) with the nested sled (200);
automatically unlocking the sled (200) from the pallet truck (100);
separating (840) the nested sled (200) from the pallet truck (100); and
picking up (845) at least one of the palletized loads using the sled (200) and maneuvering (850) the at least one of the palletized loads into the building using the sled (200).

11. A method according to claim 10, wherein the pallet truck (100) comprises a first portion (150) of a lock mechanism (500) and the sled (200) comprises a second portion (510, 520, 530, 540) of the lock mechanism (500); and wherein unlocking the sled (200) from the pallet truck (100) comprises removing the second portion (510, 520, 530, 540) of the locking mechanism from the first portion (150) of the locking mechanism automatically when the pallet truck (100) sets the sled (200) down.

12. A method according to claims 10 or 11, wherein the building is a convenience store.

13. A method according to any one of claims 10 to 12, wherein the at least one palletized load comprises beverages.

14. A method according to any one of claims 10 to 13, further comprising:
unloading (855) at least part of a palletized load at one or more target destinations in the building.

15. A method according to claim 14, further comprising:
mechanically raising at least part of a palletized load to facilitate said unloading (855).
